# EUROPEAN PATENT APPLICATION

(11) **EP 4 535 910 A1**
(43) Date of publication of application: **09.04.2025**
(21) Application number: 23811445.8
(22) Date of filing: 30.03.2023
(51) Int. Cl.: H04W 74/04, H04W 72/20, H04W 72/40, H04W 84/12

(54) **ACCESS POINT, TERMINAL, AND COMMUNICATION METHOD**

(30) Priority: 24.05.2022 JP 2022084544
(71) Applicant: Panasonic Intellectual Property Corporation of America, Torrance, CA 90504 (US)
(72) Inventor: IWAI, Takashi, Kadoma-shi, Osaka 571-0057 (JP); TAKATA, Tomofumi, Kadoma-shi, Osaka 571-0057 (JP); URABE, Yoshio, Kadoma-shi, Osaka 571-0057 (JP)
(74) Representative: Grünecker Patent- und Rechtsanwälte PartG mbB
(86) International application number: PCT/JP2023/013236
(87) International publication number: WO 2023/228566

(57) **Abstract**

In the present invention, an access point comprises a control circuit that generates a control signal that indicates uplink transmission of a plurality of terminals and that includes information regarding the destination of uplink transmission for each of the plurality of terminals, and a transmission circuit that transmits the control signal.

## Description

### Technical Field

The present disclosure relates to an access point, a terminal, and a communication method.

### Background Art

The Institute of Electrical and Electronics Engineers (IEEE) has been proceeding with the specification formulation of IEEE 802.11be (hereinafter, also referred to as "1 1be"), which is a successor to the standard IEEE 802.11ax (hereinafter, also referred to as "11ax"). For example, 11ax is also called High Efficiency (HE), and 11be is also called Extremely High Throughput (EHT). Further, discussions on the required specifications for a successor to 11be are also ongoing (see, for example, Non-Patent Literatures (hereinafter each referred to as NPL) 3 and 4). For example, the successor to 11be is also called "EHT-plus" or "beyond 11be."

### Citation List

### Non Patent Literature

NPL 1
   IEEE 802.11-21/0268r8, PDT: Channel access for Triggered TXOP Sharing
NPL 2
   IEEE 802.11-20/1312r8, AP assisted SU PPDU Tx for 11be R1
NPL 3
   IEEE 802.11-22/0046r1, Next 802.11 generation after 11be
NPL 4
   IEEE 802.11-22/0059r0, Beyond 'be'
NPL 5
   IEEE 802.11-22/0039r3, CR for 35.2.1.3 part -2
NPL 6
   IEEE 802.11-21/0485r3, EHT TF Clarifications

### Summary of Invention

There is scope for further study, however, on a method of allocating a transmission opportunity in radio communication such as wireless LAN.

One non-limiting and exemplary embodiment of the present disclosure facilitates providing an access point, a terminal, and a communication method each capable of improving the allocation efficiency of a transmission opportunity in radio communication.

An access point according to an exemplary embodiment of the present disclosure includes: control circuitry, which, in operation, generates a control signal that indicates uplink transmission from a plurality of terminals, the control signal including information on a transmission destination of the uplink transmission for each of the plurality of terminals; and transmission circuitry, which, in operation, transmits the control signal.

It should be noted that general or specific embodiments may be implemented as a system, an apparatus, a method, an integrated circuit, a computer program, a storage medium, or any selective combination thereof.

According to an exemplary embodiment of the present disclosure, it is possible to improve the allocation efficiency of a transmission opportunity in radio communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an exemplary Trigger frame;
FIG. 2 illustrates an exemplary Common Info field;
FIG. 3 illustrates an exemplary User Info field;
FIG. 4 illustrates an exemplary Special User Info field;
FIG. 5 illustrates exemplary TXOP Sharing modes;
FIG. 6 is a sequence diagram illustrating an operation example of TXOP Sharing mode 2;
FIG. 7 is a sequence diagram illustrating an operation example of TXOP Sharing for a plurality of terminals (stations (STAs)) by frequency division multiplexing (FDM);
FIG. 8 is a block diagram illustrating a part of an exemplary configuration of an access point (AP);
FIG. 9 is a block diagram illustrating a part of an exemplary configuration of a terminal;
FIG. 10 is a block diagram illustrating another exemplary configuration of an AP;
FIG. 11 is a diagram illustrating other exemplary TXOP Sharing modes;
FIG. 12 is a diagram illustrating another exemplary User Info field;
FIG. 13 is a diagram illustrating an exemplary indication method of an allocated band;
FIG. 14 is a diagram illustrating another exemplary indication method of an allocated band;
FIG. 15 is a diagram illustrating exemplary transmission destination information;
FIG. 16 is a block diagram illustrating an exemplary configuration of the terminal;
FIG. 17 is a sequence diagram illustrating an operation example of the TXOP Sharing;
FIG. 18 is a diagram illustrating other exemplary transmission destination information;
FIG. 19 is a sequence diagram illustrating another operation example of the TXOP Sharing;
FIG. 20 is a diagram illustrating still another exemplary User Info field;
FIG. 21 is a sequence diagram illustrating still another operation example of TXOP Sharing;
FIG. 22 is a sequence diagram illustrating still another operation example of TXOP Sharing;
FIG. 23 is a sequence diagram illustrating yet another operation example of TXOP Sharing;
FIG. 24 is a diagram illustrating an exemplary EHT Medium Access Control (MAC) Capabilities Information field; and
FIG. 25 is a diagram illustrating yet another exemplary User Info field.

### Description of Embodiments

Hereinafter, embodiments of the present disclosure will be described in detail with reference to the accompanying drawings.

In 11be, as in 11ax, a prioritized control scheme called Enhanced Distributed Channel Access (EDCA) may be used for priority setting of individual transmission opportunities for access categories (ACs). In the EDCA, for example, an AC that has once obtained the transmission right is allowed sequential transmission of radio signals with the minimum wait time (Short Inter Frame Space (SIFS)) gap. The time during which this successive transmission is enabled may be referred to as a "Transmission Opportunity (TXOP)." The upper limit time of the TXOP may be individually specified for an AC, for example.

In 11be, for example, "TXOP sharing" has been discussed by which an access point (AP; or also referred to as a "AP-STA (Station)") allocates at least part of the time of an obtained TXOP to a terminal (STA; Station, or also referred to as a "non-AP STA"). By way of example, a procedure in which an AP triggers the TXOP sharing for one STA (e.g., "Triggered TXOP sharing procedure") has been studied (e.g., see Non-Patent Literatures (hereinafter each referred to as "NPL") 1 and 2).

In 11ax, for example, a mechanism (e.g., referred to as a "Triggered UL operation") has been introduced in which an AP schedules a radio resource of an uplink signal of a STA by using a control signal (hereinafter referred to as a "Trigger frame (TF)") indicating transmission of the uplink signal. The Triggered UL operation can improve the efficiency of orthogonal multiplexing for the uplink signal of the STA and also improve the throughput performance.

For example, in the Triggered UL operation, an AP dynamically grasps a STA condition such as the transmission buffer status (e.g., Buffer Status Report (BSR)) or the communication quality of each STA and then calculates, based on the STA condition, a plurality of radio parameters to be applied to the uplink signal (e.g., uplink response signal for Trigger frame) of each STA. Examples of the radio parameters include a signal length, a Modulation and Coding Scheme (MCS), the number of spatial streams, and a transmission power, which are for an uplink signal. Thus, the Triggered UL operation may complicate the processing (e.g., calculation) in scheduling by an AP.

Incidentally, an uplink response signal is sometimes referred to as, for example, a trigger-based physical layer protocol data unit (TB PPDU).

Meanwhile, in the TXOP sharing, for example, when an AP allocates a portion of an obtained TXOP to a certain STA, a transmission prohibition period (Network Allocation Vector (NAV)) may be configured for a STA different from the STA to which the portion of the TXOP has been allocated. Configuring the NAV can suppress a collision of a transmission signal of the STA to which the portion of the TXOP has been allocated. Further, the STA to which the TXOP sharing is applied can improve the signal transmission efficiency by determining, based on the transmission buffer status or communication quality of this STA, the radio parameters to be applied to the transmission signal of this STA. For example, in the TXOP sharing, an AP need not perform at least part of the scheduling for an uplink signal transmitted by a STA, thus simplifying the processing in the AP, as compared with the Triggered UL operation.

Thus, in 11be, for example, supporting the TXOP sharing in addition to the Triggered UL operation makes it possible to suppress the collision of an uplink signal of a STA and improve the throughput performance with the simple processing in an AP.

In beyond 11be, for example, the necessity of performance improvement in peer to peer (P2P) or Direct Link (DiL), which is an inter-terminal communication, has been proposed (see, for example, NPLs 3 and 4). For example, a method (for example, a Trigger frame format or procedure) for the AP to indicate TXOP sharing to a plurality of terminals performing P2P communication has not been sufficiently discussed.

In 11be, for example, it has been studied that an AP instruct one terminal (STA) on the TXOP sharing (hereinafter also referred to as "TXS") by using, as a type of Trigger frame (e.g., referred to as a "Trigger Type"), a Trigger frame configured with Multi-User Request-To-Send (MU-RTS) (hereinafter referred to as a "MU-RTS Trigger frame") (see, e.g., NPL 1). Note that, the MU-RTS Trigger frame to which the TXOP sharing is applied may be referred to as an "MU-RTS TXS Trigger frame (MU-RTS TXS TF)".

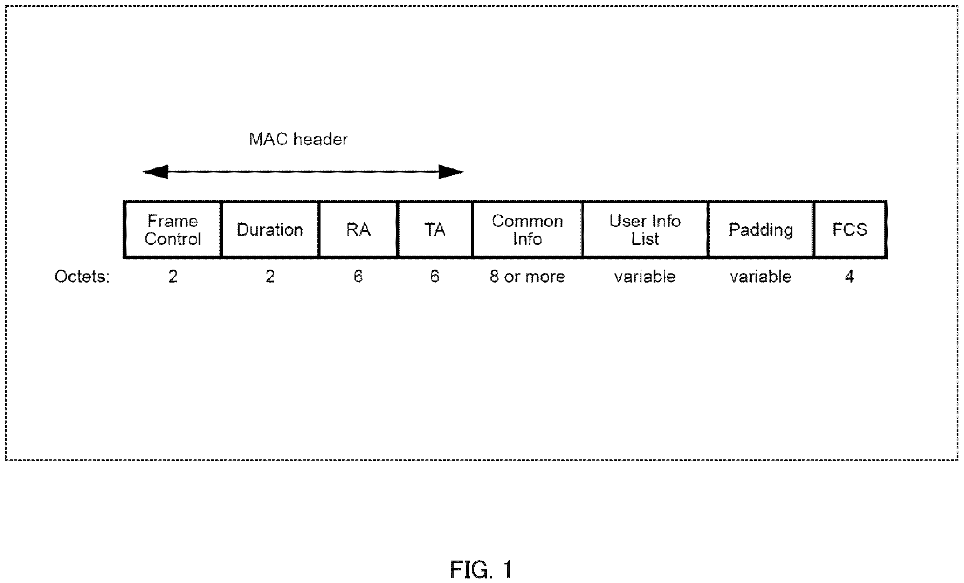

FIG. 1 illustrates an exemplary Trigger frame. As illustrated in FIG. 1, the Trigger frame includes, for a plurality of terminals to be frequency multiplexed (Frequency Division Multiplexing (FDM)), a field including information common to the plurality of terminals (hereinafter may also be referred to as "terminal-common information") (e.g., "common information field (Common Info field")) and a field referred to as a User Info List. The User Info List may include, for example, one or more fields including individual (or specific) information for the terminals (hereinafter may also be referred to as "terminal-specific information") (e.g., "user information field (User Info field")).

Further, for example, 11be may include, in the Trigger frame, a field (for example, a "Special User Info field") including information for a terminal corresponding to 11be (EHT) (not illustrated).

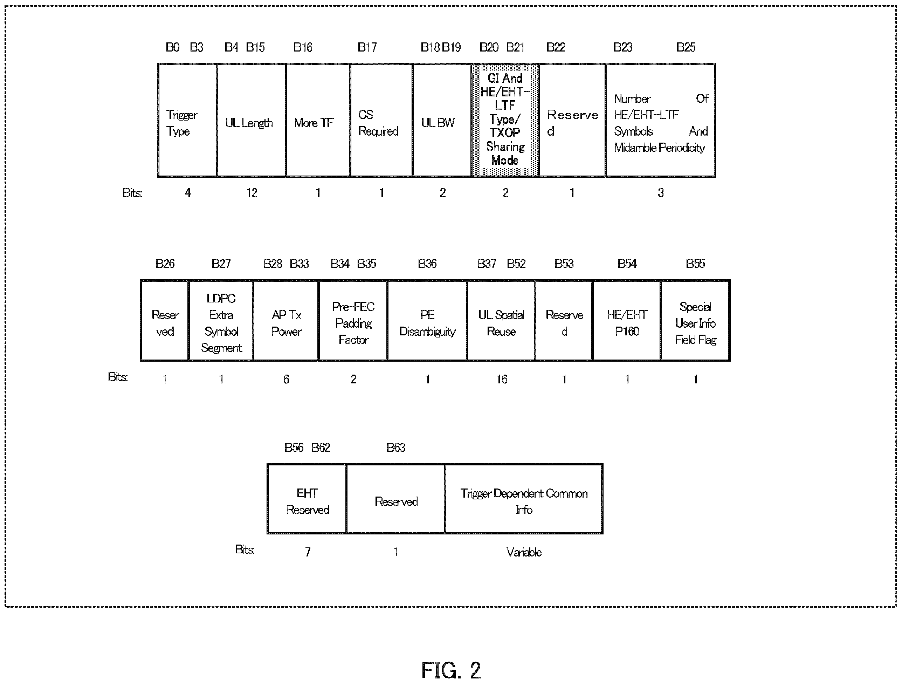

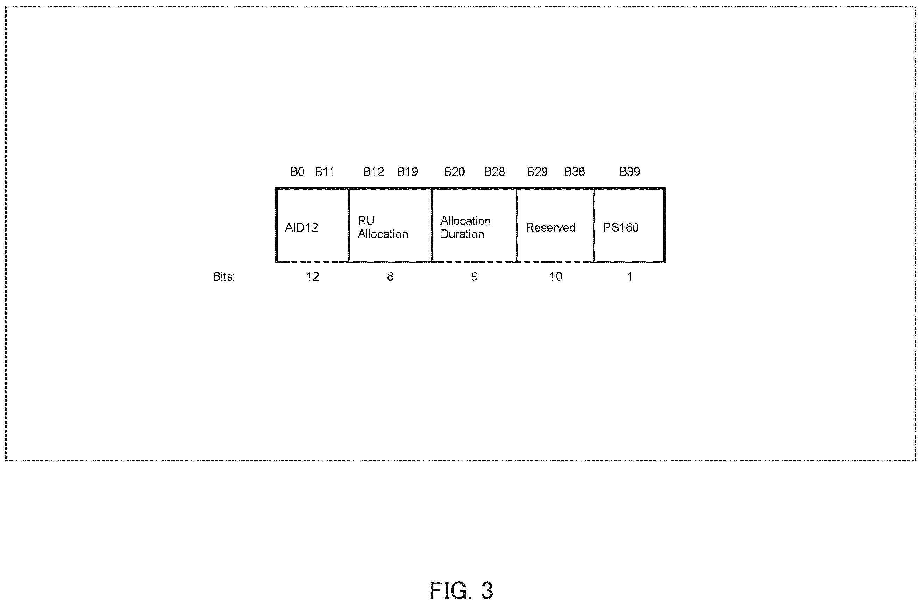

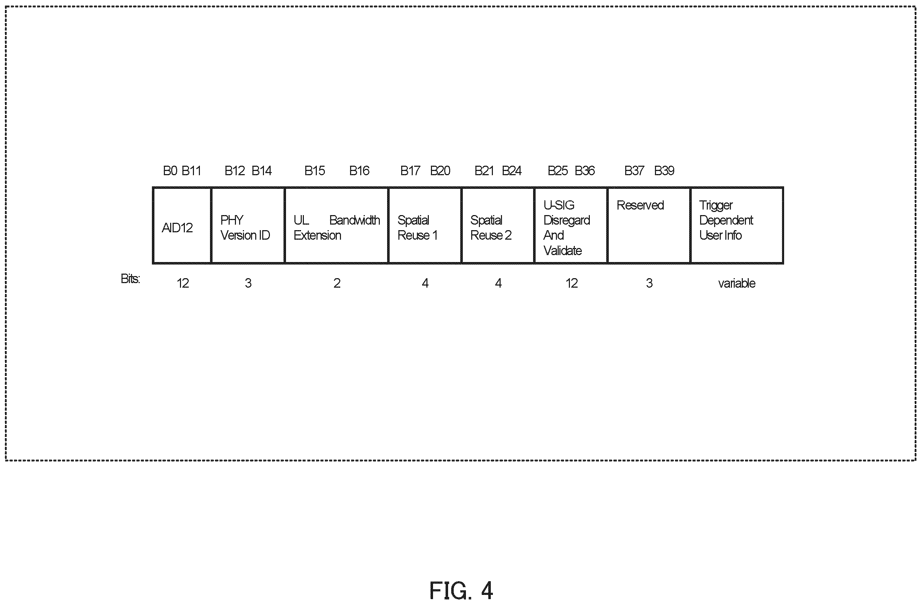

FIG. 2 is a diagram illustrating an exemplary configuration of a Common Info field that is discussed in 11be (for example, EHT) (for example, see NPL 5). FIG. 3 is a diagram illustrating an exemplary configuration of a User Info field in an MU-RTS TXS TF that is discussed in 11be (EHT) (for example, see NPL 5). FIG. 4 is a diagram illustrating an exemplary configuration of a Special User Info field (see, for example, NPL 6).

For example, a Trigger Type subfield of the Common Info field illustrated in FIG. 2 is a subfield that indicates a type of Trigger frame (e.g., type of signal transmitted from terminal caused by AP). For example, by configuring the Trigger Type to a value indicating MU-RTS (e.g., in the case of 11be, Trigger Type subfield value = 3), an AP can inform a predetermined terminal of an MU-RTS TXS Trigger frame. When the terminal receives an MU-RTS TXS Trigger frame with an Association ID (AID) of the terminal designated in a User Info field included in the received MU-RTS TXS Trigger frame, for example, the terminal may transmit a Clear To Send (CTS) frame to the AP.

In 11be, in the case of MU-RTS TXS Trigger frame, for example, the area of B20 to B21 in the Common Info field illustrated in FIG. 2 is recognized as a "TXOP Sharing Mode" subfield for the TXOP sharing configuration.

Note that, in a case of a Trigger frame of a type different from the MU-RTS TXS Trigger frame, the region of B20-21 in the Common Info field may be recognized as a "GI And HE/EHT-LTF Type" subfield. The GI and HE/EHT-LTF Type subfields may each include parameter information on, for example, an HE-Long Training Field (LTF) and an EHT-LTF. For example, the information included in the GI And HE/EHT-LTF Type subfield is information that is not used for transmission of a CTS frame that does not include

### HE/EHT-LTF.

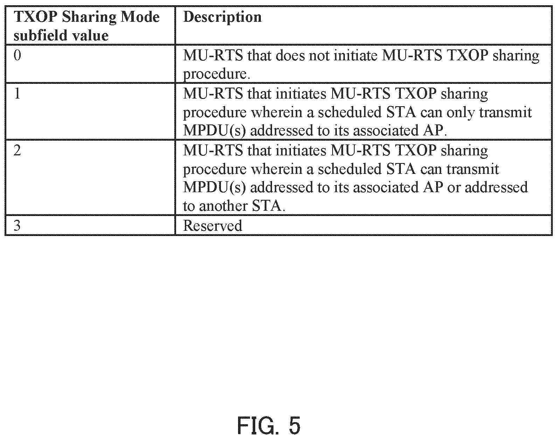

FIG. 5 illustrates exemplary TXOP Sharing Modes to be studied in 11be (see, e.g., NPL 1).

In FIG. 5, when the TxOP Sharing Mode is 0 (TxOP Sharing Mode subfield value = 0), the TXOP sharing (e.g., MU-RTS TXOP Sharing) is not performed, and a terminal transmits a CTS frame to an AP as a response to an MTS frame, for example.

Further, in FIG. 5, in a case where the TXOP Sharing Mode is 1 or 2 (TXOP Sharing Mode subfield value = 1 or 2), the TXOP sharing (for example, MU-RTS TXOP Sharing) may be performed.

For example, in a case where the TXOP Sharing Mode is 1 (also referred to as TXOP Sharing Mode 1), a terminal to be scheduled in the allocated period corresponding to a part of TXOP becomes capable of transmitting a radio frame to an AP to be connected (for example, associated AP). For example, in a case where the TXOP Sharing Mode is 1, the terminal does not transmit a radio frame to an AP or STA that is different from the AP to be connected.

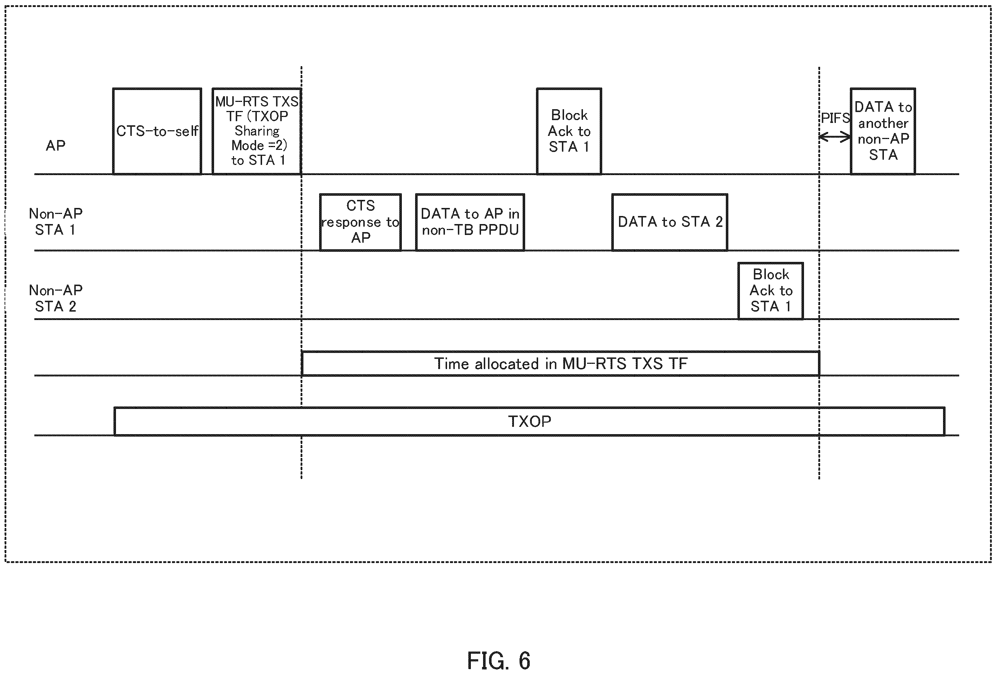

Further, for example, in a case where the TXOP Sharing Mode is 2 (also referred to as TXOP Sharing Mode 2), as illustrated in FIG. 6, the terminal to be scheduled (for example, Non-AP STA 1 or STA 1, also referred to as, e.g., "terminal 1") in the allocated period (Time allocated in MU-RTS TX TF) corresponding to a part of the TXOP is configured to be capable of transmitting a radio frame to an AP to be connected or another terminal (for example, Non-AP STA 2 or STA 2, also referred to as, e.g., "terminal 2").

In a case where the above-described TXOP Sharing Mode is equal to or larger than 1 (or in a case where the TXOP Sharing Mode is a non-zero value), that is, the MU-RTS Trigger frame to which the TXOP sharing is applied may also be referred to as an "MU-RTS TXS Trigger frame (MU-RTS TXS TF)".

Here, as illustrated in FIG. 6, when an AP receives a CTS frame (for example, CTS response) from a terminal (for example, terminal 1) with which scheduling has been performed in response to the MU-RTS TXS Trigger frame, the AP may determine that the TXOP sharing is appropriately indicated to the terminal. In this case, the AP need not transmit a signal that is different from an ACK response (for example, Block Ack) requested by the scheduled terminal in the allocated period. Note that, for example, as illustrated in FIG. 6, in a case where a carrier sense is IDLE in a Point Coordination Function (PCF) Interframe Space (PIFS) within the allocated period, the AP may take back the TXOP from the terminal and may transmit a signal to another terminal in the remaining TXOP period.

For example, the number of terminals that can be indicated with an MU-RTS TXS Trigger frame in 11be is one, and, in the MU-RTS TXS Trigger frame, one User Info field illustrated in FIG. 3 is configured (see, for example, NPL 1). Further, in the allocated period for the terminal in the TXOP Sharing, the terminal may determine parameters such as MCS of a transmission signal, and may transmit a Single User (SU) PPDU in the defined band (for example, a 20-MHz×N (N is an integer) band). Further, for an indication for the allocated period for the terminal, for example, the use of the Allocation Duration subfield in the User Info field may be considered, as illustrated in FIG. 3.

Here, for example, a method (for example, a Trigger frame format or a procedure) by which an AP indicates the TXOP sharing to a plurality of terminals for which inter-terminal communication (for example, P2P-link) is configured has not been fully studied.

In a non-limiting and exemplary embodiment of the present disclosure, an example of a method by which an AP indicates the TXOP sharing to a plurality of terminals for which a P2P-link is configured (referred to as "P2P terminals", for example) will be described.

### (Embodiment 1)

In the present embodiment, a case where TXOP sharing is performed on a plurality of terminals by FDM will be described.

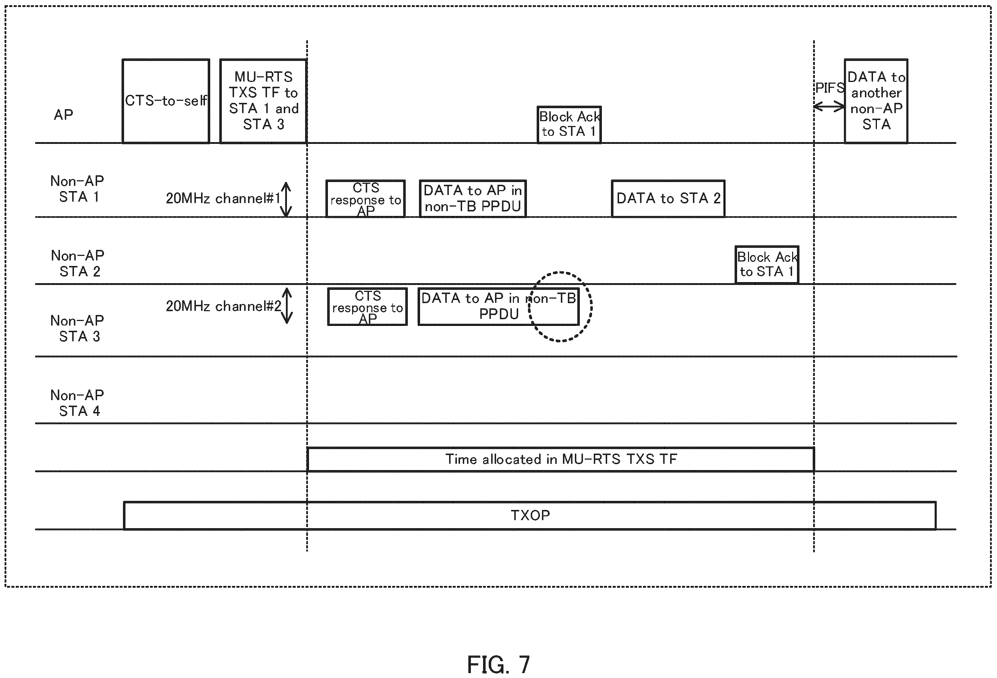

FIG. 7 is a diagram illustrating an exemplary sequence in which an AP performs the TXOP sharing on terminal 1 (STA 1) and terminal 3 (STA3) by FDM in a case of TXOP Sharing Mode 2 (for example, in a case where the scheduled terminal communicates with the connected AP or another terminal).

FIG. 7 is a diagram illustrating a configuration in which a P2P link is configured between terminal 1 (STA 1) and terminal 2 (STA 2) as an example, and a P2P link is configured between terminal 3 (STA 3) and terminal 4 (STA4). Note that, the terminal pair that performs the P2P communication may be configured by a procedure called Tunneled Direct Link Setup (TDLS) in 802.11.

In FIG. 7, the AP may allocate orthogonal frequency resources (for example, 20MHz channel×N (channel in 20-MHz unit)) to terminal 1 and terminal 3, respectively, using, for example, an MU-RTS TXS Trigger frame.

Here, terminal 1 and terminal 3 may determine the time length and the transmission destination (for example, the connected AP or another P2P terminal) of the uplink signal (for example, SU PPDU) in each. For this reason, as illustrated in FIG. 7, the time length of an SU PPDU may vary between terminal 1 and terminal 3, and thus, the transmission timing and the reception timing at the AP may overlap with each other. For example, when a transmission timing and a reception timing overlap with each other, an AP not supporting full-duplex communication may not perform the processing on either a transmission signal or a received signal. Further, even when the AP supports the full-duplex communication, for example, self-interference (i.e., case where received signal includes adjacent-channel interference of transmission signal) occurs, which may deteriorate the reception performance.

For example, as illustrated in FIG. 7, there is a possibility that an ACK (for example, Block Ack) frame to be transmitted from the AP to terminal 1 and an SU PPDU frame (for example, DATA to AP in non-TB PPDU) to be transmitted from terminal 3 to the AP overlap with each other. In this case, for example, the AP may not receive the SU PPDU frame from terminal 3, and STA 3 may retransmit the SU PPDU. As described above, there is a possibility that the time resource allocated by an AP is not effectively utilized.

In the present embodiment, a method of controlling the transmission destination in a time resource that is subjected to the TXOP sharing for a plurality of P2P terminals will be described, for example.

### [Configuration of Radio Communication System]

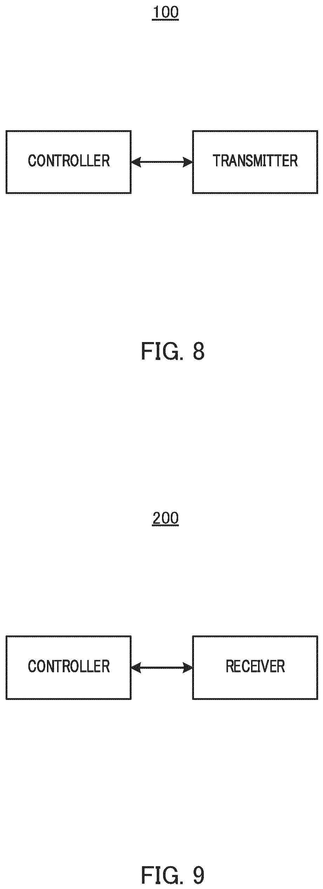

A radio communication system according to the present embodiment may include, for example, AP 100 illustrated in FIG. 8 and terminal (STA) 200 illustrated in FIG. 9. At least one of AP 100 and STA 200 in number of two or more may be present in the radio communication system. For example, AP 100 may transmit, to terminal 200, a Trigger frame (e.g., MU-RTS TXS Trigger frame) indicating the TXOP Sharing. Terminal 200 may receive an MU-RTS TXS Trigger frame and transmit a signal to AP 100 or another terminal based on the resource (for example, an allocated time (or allocated period) and an allocated band (or allocated channel)) indicated by the received MU-RTS TXS Trigger frame.

FIG. 8 is a block diagram illustrating a part of an exemplary configuration of AP 100 according to an embodiment of the present disclosure. In AP 100 illustrated in FIG. 8, a controller (corresponding to, for example, control circuitry) generates a control signal (for example, a Trigger frame) that indicates uplink transmission from a plurality of terminals, the control signal including information on a transmission destination (for example, transmission destination information) of the uplink transmission for each of the plurality of terminals. A transmitter (corresponding to, for example, transmission circuitry) transmits the control signal.

FIG. 9 is a block diagram illustrating a part of an exemplary configuration of terminal 200 according to an embodiment of the present disclosure. In terminal 200 illustrated in FIG. 9, a receiver (corresponding to, for example, reception circuitry) receives a control signal (for example, a Trigger frame) that indicates uplink transmission from a plurality of terminals, the control signal including information on a transmission destination (for example, transmission destination information) of the uplink transmission for each of the plurality of terminals. A controller (corresponding to, for example, control circuitry) controls the uplink transmission based on the control signal.

### [Configuration Example of AP 100]

AP 100 generates a Trigger frame (e.g., MU-RTS TXS Trigger frame) instructing multiple terminals on the TXOP Sharing and then transmits the MU-RTS TXS Trigger frame to terminal 200, for example.

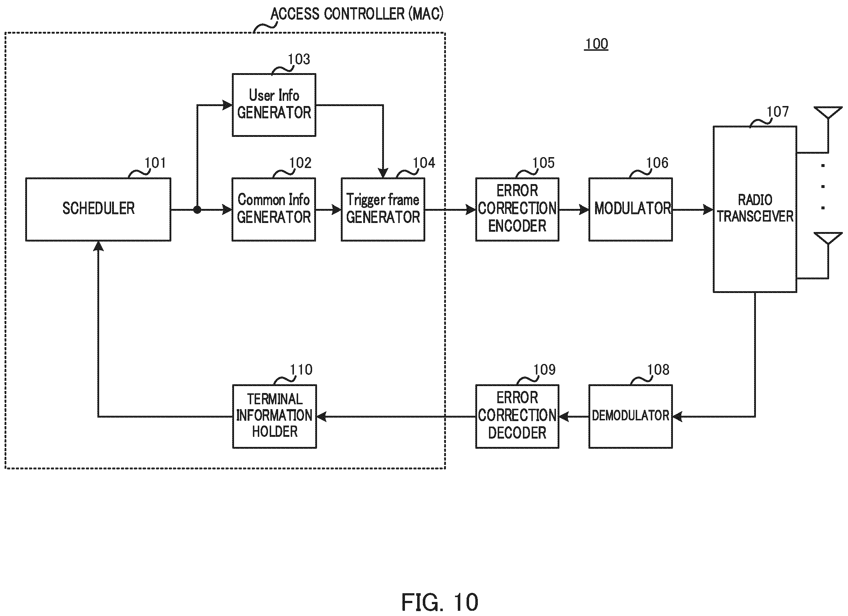

FIG. 10 is a block diagram illustrating an exemplary configuration of AP 100. AP 100 illustrated in FIG. 10 may include, for example, scheduler 101, Common Info generator 102, User Info generator 103, Trigger frame generator 104, error correction encoder 105, modulator 106, radio transceiver 107, demodulator 108, error correction decoder 109, and terminal information holder 110.

For example, scheduler 101, Common Info generator 102, User Info generator 103, Trigger frame generator 104, and terminal information holder 110 may be included in an access control apparatus (for example, a Medium Access Control (MAC) processor).

Further, at least one of scheduler 101, Common Info generator 102, User Info generator 103, Trigger frame generator 104, error correction encoder 105, modulator 106, demodulator 108, error correction decoder 109, and terminal information holder 110 illustrated in FIG. 10 may be included in the control apparatus illustrated in FIG. 8, for example. Further, radio transceiver 107 illustrated in FIG. 10 may be included in the transmitter illustrated in FIG. 8, for example.

Scheduler 101 may perform scheduling for, for example, terminal 200. For example, scheduler 101 may determine the TXOP Sharing mode to be applied to terminal 200 and the allocated radio resource (for example, at least one of the allocated period and the allocated band in TXOP sharing is included) based on the terminal information inputted from terminal information holder 110.

For example, the TXOP Sharing mode may include, in addition to the TXOP Sharing mode for one terminal described above, a TXOP Sharing mode for a plurality of terminals. In a case where the TXOP Sharing mode to a plurality of terminals is applied, scheduler 101 may determine information on the transmission destination in uplink transmission (hereinafter, referred to as "transmission destination information") for plurality of terminals 200 to which the TXOP sharing is applied, for example.

The transmission destination information may include information indicating whether or not uplink transmission to AP 100 is allowed, for example. For example, the transmission destination information may include information indicating a transmission destination for which transmission and reception of a signal using an allocated radio resource are allowed. As an example, the transmission destination information may be information indicating any of permission for communication with any of other terminals different from AP 100 and plurality of terminals 200 to which the TXOP sharing is applied and permission (or non-permission for communication with AP 100) for communication with the other terminals.

Besides, the allocated radio resource may include, for example, a period (e.g., time resource) of a portion of the TXOP obtained by AP 100. In addition, for example, when the TXOP sharing for multiple terminals is applied by FDM, the allocated radio resource may include channels (e.g., bands in 20-MHz unit) to be assigned to terminals 200. For example, the allocated radio resource (for example, the allocated band) may include at least part of a band in which the Trigger frame is allocated, or may include a band different from the band in which the Trigger frame is allocated.

Further, the terminal information may include, for example, Capability information of terminal 200, a transmission buffer status, control information on a P2P configuration, or information on a Sub-Channel Selective Transmission (SST) Mode.

For example, the Capability information may include information indicating whether or not terminal 200 is capable of transmitting and receiving in a channel (for example, a Secondary channel) different from the Primary channel. Further, in a case where terminal 200 supports multiple-link transmission, the Capability information may include, for example, information (for example, whether or not the terminal is a terminal corresponding to Simultaneous transmit and receive (STR)) indicating whether or not the terminal is capable of simultaneously performing transmission and reception.

The transmission buffer status may include information on the AC and size of transmission buffer addressed to AP 100 in terminal 200, for example. Additionally, the transmission buffer status may include, for example, information on the AC and size of transmission buffer addressed to another terminal (also called "Direct Link Peer (DLP) STA") that is connected to terminal 200 in P2P link (or Direct Link).

The P2P configuration information may include, for example, terminal information (for example, a terminal ID) for performing the P2P communication with terminal 200. Further, the P2P configuration information may include information indicating whether or not Off-channel (configuration for performing the P2P communication outside the Operation band of AP 100) is implemented, for example.

The information on the SST Mode may include, for example, information indicating whether or not terminal 200 is a terminal for which the SST Mode is configured. Further, in a case where terminal 200 is a terminal for which the SST Mode is configured, the information on the SST Mode may include information indicating a Sub-Channel (a channel different from the Primary channel) to be used in a case where a Target wake time (TWT) is applied, for example.

Scheduler 101 outputs information on the determined TXOP sharing mode and the allocated radio resource for each terminal 200 to Common Info generator 102 and User Info generator 103, for example.

Common Info generator 102 may generate control information included in a Common Info field that is common to a plurality of terminals 200, for example. For example, Common Info generator 102 may generate information on a Trigger type subfield and a TXOP sharing mode subfield based on the information on the TXOP sharing inputted from scheduler 101.

Further, Common Info generator 102 may generate information on the allocated period to terminal 200 based on the information on the allocated radio resource inputted from scheduler 101, for example.

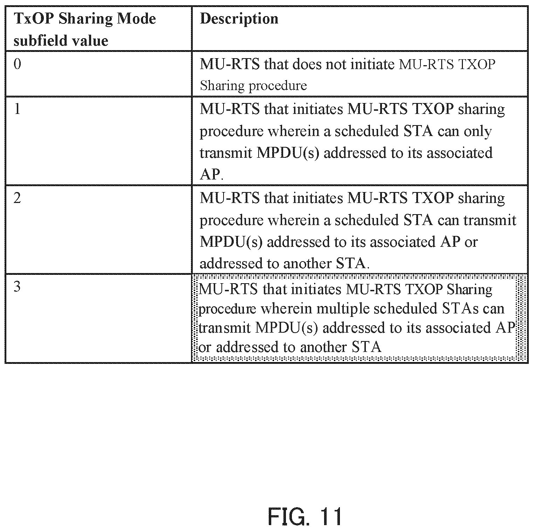

The association between the TXOP sharing mode and the information (value of a TXOP sharing mode subfield) indicating the TXOP sharing mode in the Trigger frame may be, for example, information in a table format (referred to as, for example, a "TXOP sharing mode table"), or may be information in a format different from the table format. FIG. 11 is a diagram illustrating an exemplary TXOP sharing mode table. The TXOP sharing mode table may be defined in, for example, a specification. The TXOP sharing mode table illustrated in FIG. 11 may include, for example, a TXOP sharing mode described in NPL 1 and illustrated in FIG. 5 (e.g., TXOP sharing mode = any of 0 to 2) and a TXOP sharing mode for a plurality of terminals 200 (e.g., TXOP sharing mode = 3).

In one example, when the TXOP sharing is performed, Common Info generator 102 may generate an MU-RTS TXS Trigger frame by configuring a Trigger type subfield with MU-RTS and configuring the TXOP sharing mode subfield with a predetermined value (e.g., for TXOP sharing mode table of FIG. 11, any value equal to or greater than one).

Common Info generator 102 may output the generated information on the Common Info field to Trigger frame generator 104.

The term "configuration" for a field (e.g., subfield) in a Trigger frame may be replaced with other terms such as "definition" and "interpretation," for example.

User Info generator 103 may, for example, generate control information included in a Special User Info field or an individual User Info field for terminal 200. User Info generator 103 may, for example, generate the information on the Special User Info field or the individual User Info field for terminal 200, based on the specified format, and then generate information on a User Info List that includes the User Info field for each of a plurality of terminals 200. User Info generator 103 may, for example, output the information on the User Info List to Trigger frame generator 104.

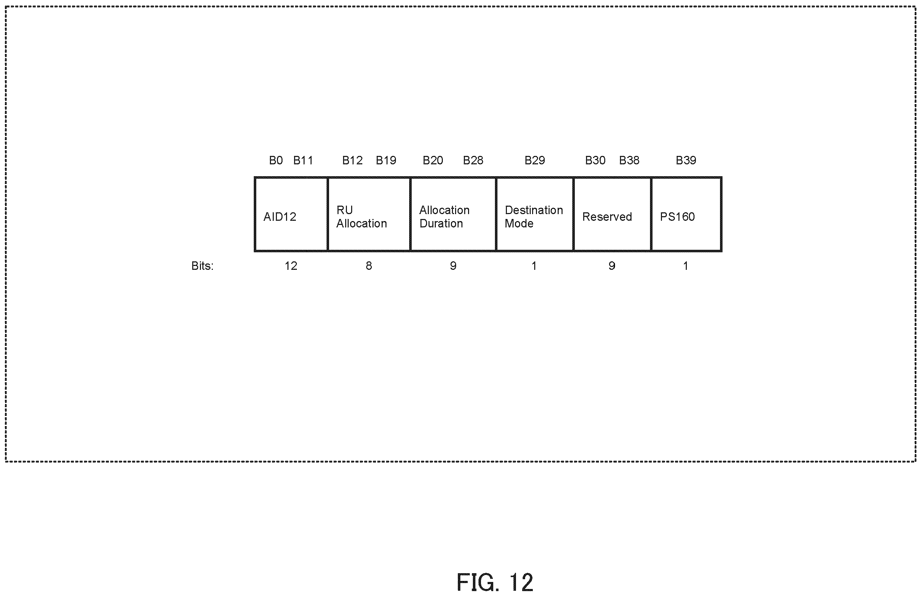

Further, for example, as illustrated in FIG. 12, User Info generator 103 may generate, based on the information on the allocated radio resource inputted from scheduler 101, an ID of terminal 200 (information of the AID12 subfield) and information (for example, information of the RU Allocation subfield) on the allocated band (for example, band in 20-MHz channel unit) to terminal 200, information (information of the Allocation Duration subfield) on the allocated period to terminal 200, and transmission destination information (for example, information of the Destination Mode subfield) on the transmission destination for which the transmission and reception using the radio resource allocated to terminal 200 are allowed. User Info generator 103 may output the generated User Info List to Trigger frame generator 104, for example.

The information on the allocated band to terminal 200 (for example, information indicated in the RU allocation subfield in FIG. 12) may indicate the frequency resource position of 20-MHz×N allocated to terminal 200, for example. For example, the method of indicating the position of a frequency resource of a CTS frame by using MU-RTS, which is applied in 11ax, may be applied as the method of indicating the position of a frequency resource of 20-MHz×N.

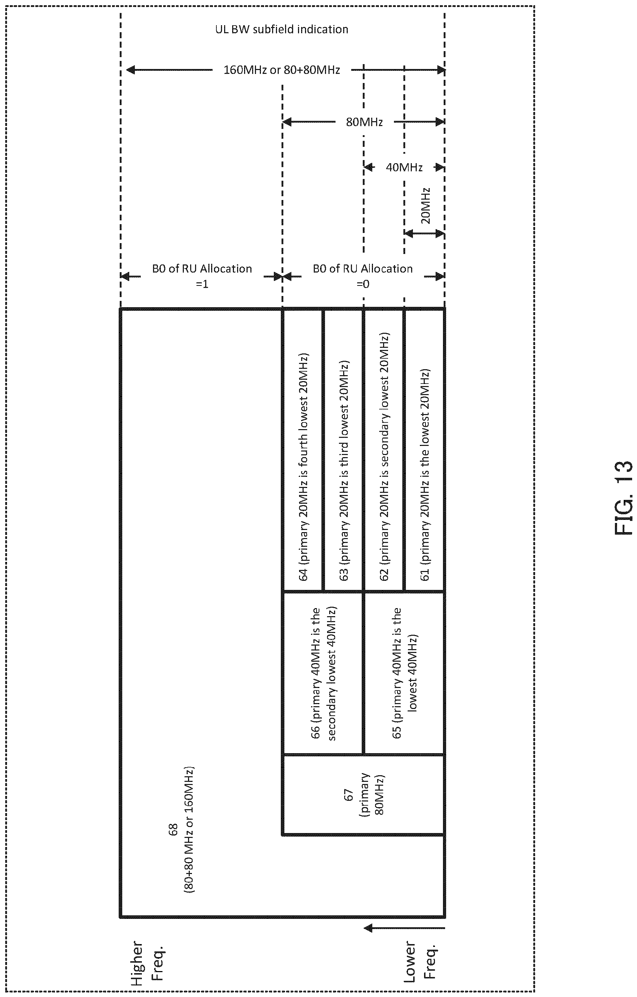

FIG. 13 is a diagram illustrating an exemplary indication method of a frequency resource with an MU-RTS Trigger frame. In the MU-RTS supported in 11ax, the frequency resource for CTS may be individually indicated to terminal 200 by a combination of, for example, a "UL BW subfield" included in the Common Info field of the MU-RTS Trigger frame and an "RU Allocation subfield" included in the User Info field of the MU-RTS Trigger frame. For example, as illustrated in FIG. 13, the UL BW subfield designates the Operation bandwidth (for example, 20 MHz, 40 MHz, 80 MHz, or 160 MHz) in uplink, and the RU allocation subfield designates the position of the frequency resource to be allocated to communication in the allocated period. In the present embodiment, the channel to be used by terminal 200 in the allocated period for the TXOP sharing may be indicated, for example, by the same method as the method illustrated in FIG. 13. Note that, a channel to be used by terminal 200 in the allocated period for the TXOP sharing may be indicated by a method different from the method illustrated in FIG. 13.

In addition, when a frequency resource position for communication in an allocated period is indicated in an Operation band including 320 MHz, which is newly supported in 11be, a "UL Bandwidth Extension subfield" included in the Special User Info field illustrated in FIG. 4 may be used, for example. For example, the combination of the UL BW subfield in the Common Info field and the UL Bandwidth Extension subfield in the Special User Info field may indicate the Operation bandwidth to terminal 200.

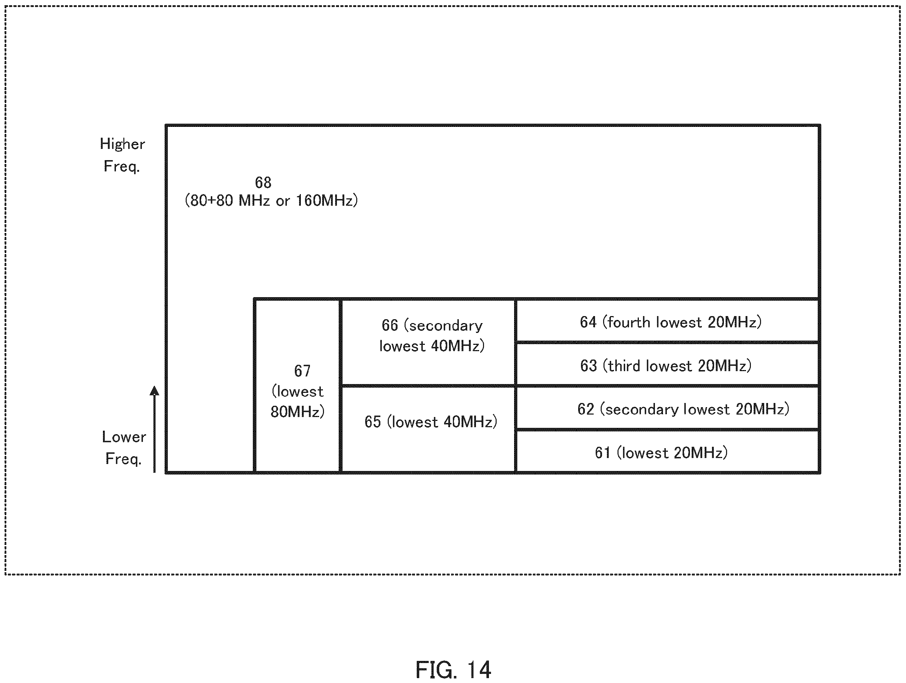

Note that, the indication method illustrated in FIG. 13 is a method of indicating a frequency resource position including the Primary 20-MHz channel, but the present embodiment is not limited to this, and for example, a method of indicating any frequency resource of 20-MHz×N channel within the Operation band that does not include the Primary 20-MHz channel may be used, as illustrated in FIG. 14.

Further, the information (for example, the information indicated in the Allocation Duration subfield in FIG. 12) on the allocated period to terminal 200 may include, for example, information in which an allocated period to be shared with terminal 200 within the TXOP acquired by AP 100 is indicated in a range of a predetermined time length (for example, up to 8 ms) from the completion timing of MU-RTS TXS TF with a predetermined time granularity (for example, in units of 16 us).

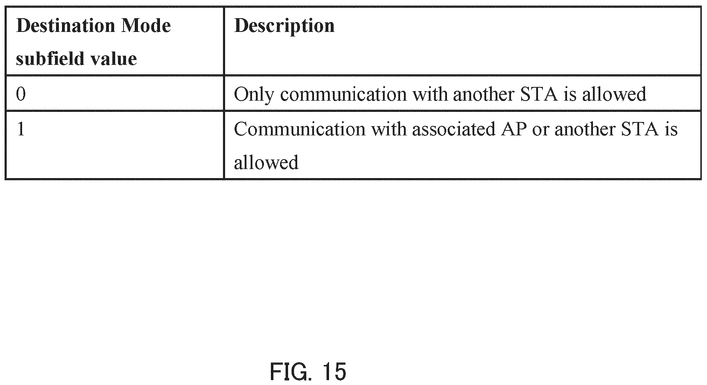

Further, the transmission destination information (for example, information indicated in Destination Mode subfield in FIG. 12) on the transmission destination for which the transmission and reception are allowed in the allocated radio resource may include, for example, information illustrated in FIG. 15. For example, as illustrated in FIG. 15, in a case where the value of the Destination Mode subfield is 0, another terminal may be configured as the transmission destination for which the transmission and reception using the allocated radio resource are allowed, and AP 100 need not be configured as the transmission destination (for example, only another terminal may be configured). As illustrated in FIG. 15, AP 100 or another terminal may be configured as the transmission destination for which the transmission and reception using the allocated radio resource are allowed in a case where the value of the Destination Mode subfield is 1, for example.

Note that the information on the transmission destination for which the transmission and reception using the allocated radio resource are allowed may be indicated to terminal 200 in a case where the TXOP sharing mode for a plurality of terminals is applied (for example, in a case where the TXOP Sharing Mode subfield value is 3 in FIG. 11), for example. For example, when the TXOP Sharing mode for one terminal is applied, the information on the transmission destination for which the transmission and reception using the allocated radio resource are allowed may not be indicated to terminal 200.

Further, the number of User Info fields included in the User Info List may be associated with the TXOP sharing mode indicated in the TXOP sharing mode subfield, for example. By way of example, when the TXOP sharing mode is a mode for applying the TXOP sharing for one STA (e.g., when TXOP sharing mode = 1 or 2 is indicated based on TXOP sharing mode table illustrated in FIG. 11), the User Info List may include a single User Info field. On the other hand, when the TXOP sharing mode is a mode for applying the TXOP sharing for multiple terminals (e.g., when TXOP sharing mode = 3 is indicated based on TXOP sharing mode table illustrated in FIG. 11), the User Info List may include a plurality of User Info fields.

Note that the Special User Info field may include control information for one terminal 200 regardless of a TXOP sharing mode.

Trigger frame generator 104, for example, may generate, based on the format illustrated in FIG. 1, a Trigger frame including the information on the Common Info field inputted from Common Info generator 102 and the information on the User Info List (e.g., Special User Info field and at least one User Info field) inputted from User Info generator 103. The Trigger frame may include, for example, at least one of a MAC header, Padding, and a frame check sequence (FCS), in addition to the Common Info field and the User Info List. Trigger frame generator 104 may, for example, output the generated Trigger frame to error-correction encoder 105.

Error-correction encoder 105, for example, performs error correction encoding on a transmission data signal including the Trigger frame inputted from Trigger frame generator 104 and outputs the encoded signal to modulator 106.

Modulator 106, for example, performs modulation processing on the signal inputted from error-correction encoder 105 and outputs the modulated signal to radio transceiver 107.

Incidentally, in a case where the modulated data signal is an orthogonal frequency division multiplexing (OFDM) signal, AP 100 (e.g., modulator 106) may form the OFDM signal by mapping the modulated signal to a specified frequency resource, performing Inverse Fast Fourier transform (IFFT) processing in order to transform the modulated signal into a time waveform, and adding a cyclic prefix (CP).

Radio transceiver 107, for example, performs radio transmission processing such as D/A conversion and/or up-conversion to a carrier frequency on the modulated signal inputted from modulator 106, and transmits the signal resulting from the radio transmission processing to terminal 200 via an antenna. Additionally, radio transceiver 107, for example, receives, via an antenna, a signal transmitted from terminal 200 and performs, on the received signal, radio reception processing such as down-conversion to baseband and/or A/D conversion, and outputs the signal resulting from the radio reception processing to demodulator 108.

Demodulator 108, for example, performs demodulation processing on the signal inputted from radio transceiver 107 and outputs the demodulated signal to error correction decoder 109. Incidentally, when the signal inputted to demodulator 108 is an OFDM signal, AP 100 (e.g., demodulator 108) may perform CP removal processing and Fast Fourier transform (FFT) processing.

Error correction decoder 109, for example, decodes a signal inputted from demodulator 108 and acquires a received data signal from terminal 200. For example, in a case where the terminal information described above is included in the received data after the decoding, error correction decoder 109 outputs the decoded data including the terminal information to terminal information holder 110.

For example, terminal information holder 110 may acquire (or hold), from the decoded data inputted from error correction decoder 109, terminal information (for example, Capability information of terminal 200, a transmission buffer status, P2P configuration information, or information on an SST Mode may be included) and may output the acquired terminal information to scheduler 101.

### [Exemplary Configuration of Terminal 200]

Terminal 200 receives, for example, a Trigger frame (for example, MU-RTS TXS Trigger frame) indicating TXOP Sharing from AP 100, and transmits an uplink response signal (for example, a CTS frame) to AP 100 in response to the Trigger frame. Then, terminal 200 communicates with the allowed transmission destination (for example, AP 100 or another terminal) using an allocated channel within an allocated period, based on the indication in the MU-RTS TXS Trigger frame, for example.

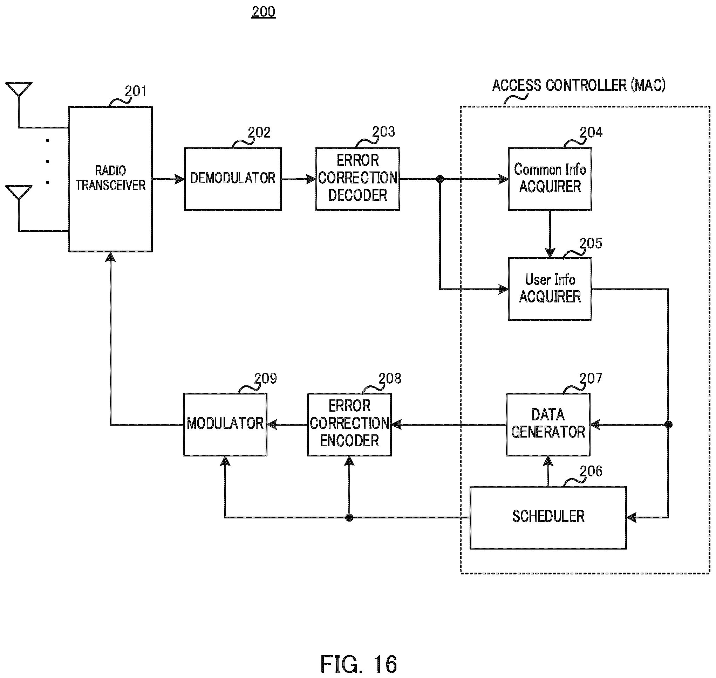

FIG. 16 is a block diagram illustrating an exemplary configuration of terminal 200. Terminal 200 illustrated in FIG. 16 may include, for example, radio transceiver 201, demodulator 202, error correction decoder 203, Common Info acquirer 204, User Info acquirer 205, scheduler 206, data generator 207, error correction encoder 208, and modulator 209.

For example, at least one of Common Info acquirer 204, User Info acquirer 205, scheduler 206, and data generator 207 may be included in an access controller (for example, a MAC processor).

Further, at least one of demodulator 202, error correction decoder 203, Common Info acquirer 204, User Info acquirer 205, scheduler 206, data generator 207, error correction encoder 208, and modulator 209 illustrated in FIG. 16 may be included in the controller illustrated in FIG. 9, for example. Further, radio transceiver 201 illustrated in FIG. 16 may be included in the receiver illustrated in FIG. 9, for example.

Radio transceiver 201, for example, receives a received signal via an antenna and performs, on the received signal, radio reception processing such as down-conversion and/or A/D conversion and outputs the signal resulting from the radio reception processing to demodulator 202. Additionally, radio transceiver 201 performs radio transmission processing such as up-conversion and/or D/A conversion on a signal inputted from modulator 209, and transmits the signal resulting from the radio transmission processing via an antenna.

Demodulator 202, for example, performs demodulation processing on the received data inputted from radio transceiver 201, and outputs the demodulated signal to error correction decoder 203. Incidentally, when the signal inputted to demodulator 202 is an OFDM signal, terminal 200 (e.g., demodulator 202) may perform the CP removal processing and the FFT processing.

Error correction decoder 203 may, for example, decode the demodulated signal inputted from demodulator 202 and output the decoded signal as a received data signal. Further, error correction decoder 203, for example, outputs a Trigger frame in the received data signal to Common Info acquirer 204 and User Info acquirer 205.

Common Info acquirer 204 may, for example, extract information corresponding to a Common Info field from the Trigger frame inputted from error correction decoder 203, and acquire terminal-common information on the TXOP sharing.

The terminal common information on the TXOP sharing may include, for example, information on a TXOP sharing mode and information on an allocated channel to terminal 200. Further, the terminal common information may include information on an allocated period to terminal 200. Further, the terminal common information may include, for example, information indicating a TXOP sharing mode for a plurality of terminals based on FDM.

Common Info acquirer 204 may output the extracted terminal common information to User Info acquirer 205.

User Info acquirer 205 may, for example, extract information corresponding to a User Info List (e.g., at least one User Info field and Special User Info field) from the Trigger frame inputted from error correction decoder 203, and perform reception processing of a User info field based on the terminal-common information (e.g., including TXOP sharing mode) inputted from Common Info acquirer 204. User Info acquirer 205 may, for example, perform the reception processing of a plurality of User Info fields when the TXOP sharing mode indicates the TXOP sharing for multiple terminals. On the other hand, User Info acquirer 205 may, for example, perform the reception processing of a single User Info field when the TXOP sharing mode indicates the TXOP sharing for one terminal.

For example, when decoding information (for example, a terminal ID or AID) for identifying terminal 200 included in the User Info field and determining that there is an allocation indication to terminal 200, User Info acquirer 205 may acquire, from the User Info field, at least one of terminal-specific information (for example, transmission destination information on allocated radio resource such as allocated period and allocated channel, and on transmission destination for which transmission and reception using allocated radio resource are allowed) related to the TXOP sharing and the terminal common information (for example, information including the TXOP Sharing Mode and the UL BW).

User Info acquirer 205 may, for example, output the terminal-specific information and the terminal common information to scheduler 206 and data generator 207.

For example, scheduler 206 may determine the allocated radio resource and the transmission destination of uplink transmission based on the information inputted from User Info acquirer 205 (including, for example, terminal-specific information and terminal common information). Scheduler 206 may control, based on the allocated radio resource, for example, data transmission in the allocated radio resource subjected to the TXOP sharing indicated by AP 100. The control of the data transmission may include, for example, control on the allocated period, the allocated channel, and the transmission destination within the allocated period.

For example, scheduler 206 may output, to data generator 207, control information on data generation (including, for example, a radio parameter to be applied to a data signal (signal length, a modulation scheme, an error correction coding rate, the number of space multiplexes, a transmission power), etc.).

Here, a part of the radio parameter to be applied to the data signal (for example, at least one of the signal length, the modulation scheme, the error correction coding rate, the number of space multiplexes, and the transmission power) may be determined by terminal 200 based on a parameter such as the transmission buffer status or the communication quality of terminal 200. In other words, a part of the radio parameter to be applied to the data signal need not be indicated by AP 100.

Note that, the signal length of data may be a length within the allocated period indicated by AP 100, for example. Further, the transmission channel allocated to the data signal may be determined based on the allocated channel indicated by AP 100.

Further, the transmission destination within the allocated period may be determined in accordance with the information acquired in User Info acquirer 205. For example, in the definition shown in FIG. 15, when the Destination Mode subfield value of the User Info field is 0, scheduler 206 configures (for example, limits) the transmission destination of the signal in the allocated period to another terminal for which P2P is configured. For example, when the Destination Mode subfield value is 0, AP 100 may not be configured as a transmission destination of a signal in an allocated period.

Further, for example, in the definition shown in FIG. 15, when the Destination Mode subfield value is 1, scheduler 206 configures the transmission destination of the signal in the allocated period to another terminal for which P2P is configured, or AP 100. For example, scheduler 206 may select a transmission destination in accordance with the priority of a transmission packet.

For example, data generator 207 generates a data signal (for example, a CTS frame, data addressed to AP 100, or data addressed to another terminal) based on the control information inputted from scheduler 206 and the information inputted from User Info acquirer 205, and outputs the data signal to error correction encoder 208.

For example, data generator 207 may generate a CTS frame after receiving (for example, immediately after) the MU-RTS TXS Trigger frame. Further, data generator 207 may generate a data signal (for example, SU-PPDU) for the allowed transmission destination after the transmission of the CTS frame (for example, when SIFS elapses after transmission of CTS frame), for example.

Error correction encoder 208 performs error correction encoding on the data signal inputted from data generator 207, and outputs the encoded signal to modulator 209. Note that the encoding rate for the data signal may be determined by, for example, terminal 200.

Modulator 209 modulates the signal inputted from error correction encoder 208, and outputs the modulated signal to radio transceiver 201. Note that, the modulation scheme applied in modulator 209 may be determined by terminal 200, for example. Further, in a case where the modulation signal is an OFDM signal, terminal 200 (for example, modulator 209) may form an OFDM signal by mapping the modulated signal to a frequency resource, performing the IFFT processing, and adding a CP.

### [Operation Examples of AP 100 and Terminal 200]

Next, operation examples of AP 100 and terminal 200 according to the present embodiment will be described.

In the following, a description will be given of a method of instructing the TXOP sharing for a plurality of terminals 200 different from AP 100 (e.g., Non-AP terminal) (e.g., allocation of a portion of transmission opportunity (TXOP) obtained by AP 100) by using a single Trigger frame (e.g., MU-RTS TXS Trigger frame) generated by AP 100 (e.g., Common Info generator 102, User Info generator 103, and Trigger frame generator 104).

Incidentally, the plurality of terminals 200 different from AP 100 may include, for example, a pair of terminals 200 that perform the P2P communication (e.g., inter-terminal communication).

### <Indication Example of Terminal Common Information>

The terminal-common information may include information on, for example, a TXOP sharing mode.

AP 100 may, for example, generate information on a TXOP sharing mode subfield (e.g., TXOP sharing mode subfield value), based on the TXOP sharing mode table illustrated in FIG. 11. The TXOP sharing mode table illustrated in FIG. 11 may include, for example, information indicating the TXOP sharing for multiple terminals (e.g., TXOP Sharing Mode subfield value = 3).

For example, when indicating the TXOP sharing for a plurality of terminals 200 different from AP 100, AP 100 may generate a Trigger frame including information indicating TXOP sharing mode subfield value = 3 in the TXOP sharing mode table illustrated in FIG. 11. For example, AP 100 may configure information on the TXOP sharing for the plurality of terminals (for example, information indicating sharing of a transmission opportunity with a plurality of terminals) in a Common Info field common to terminals 200 in the Trigger frame.

Further, in a case where information on the TXOP sharing for a plurality of terminals is configured, for example, AP 100 may configure User Info fields respectively for the plurality of terminals 200 to which the TXOP sharing is applied in the Trigger frame.

### <Indication Example of Terminal-specific Information>

The terminal-specific information may include, for example, allocated band information (for example, a 20-MHz x N band) to terminal 200, information on an allocated period to terminal 200, and information on the transmission destination for which the transmission and reception using the allocated radio resource to terminal 200 are allowed.

The allocated band may be configured to, for example, a band included in a transmission band for the MU-RTS TXS Trigger frame to be transmitted by AP 100. For example, the allocated band may be at least part of a band to which the MU-RTS TXS Trigger frame is allocated.

The allocated period may be configured to, for example, a part of the TXOP period acquired by AP 100. Further, different periods may be indicated for the plurality of terminals 200 as the allocated period.

Note that, the information on the allocated period is not limited to being included in the terminal-specific information, and may be included in another field. For example, the information on the allocated period may be included in some subfields of a Common Info field (for example, a UL Length subfield and a Reserved subfield) as the terminal common information.

In the transmission destination information, for example, as illustrated in FIG. 15, another terminal (for example, a terminal for which a P2P configuration with terminal 200 is completed) may be configured (for example, limited), or AP 100 and another terminal may be configured as a transmission destination for which the transmission and reception using the allocated radio resource are allowed. In a case where AP 100 and another terminal are configured for the transmission destination information, terminal 200 may select any of AP 100 and the other terminal as a transmission destination.

For example, as illustrated in FIG. 12, AP 100 may configure a subfield (for example, a Destination Mode subfield) for indicating the transmission destination information in a B29 field, which is a Reserved area in the User Info field in FIG. 3, in the User Info field.

Note that, the name of the subfield for indicating the transmission destination information is not limited to Destination Mode, and may be another name. Further, the subfield for indicating the transmission destination information is not limited to the area of B29, and may be configured in another area. Further, the type (for example, a candidate for a transmission destination) of a transmission destination that can be indicated in the transmission destination information is not limited to two types as illustrated in FIG. 15 and may be three or more types.

Further, for example, in a case where the TXOP sharing mode for a plurality of terminals is applied (for example, in a case where TXOP sharing mode = 3 in FIG. 11), the area of B29 of the User Info field illustrated in FIG. 12 is configured as the Destination Mode subfield, and in a case where the TXOP sharing for the plurality of terminals is not applied, the area of B29 of the User Info field illustrated in FIG. 12 may be configured as another Subfield (for example, a Reserved field).

For example, in the definition shown in FIG. 15, in a case where Destination Mode subfield = 0, another terminal (for example, a P2P terminal) may be configured as a transmission destination for which the transmission and reception using the allocated radio resource to terminal 200 indicated by AID12 subfield illustrated in FIG. 12 are allowed, and AP 100 need not be configured. For example, in a case where Destination Mode subfield value = 0, the transmission destination is limited to another terminal (for example, a P2P terminal), and uplink transmission to AP 100 is not allowed.

Further, for example, in the definition shown in FIG. 15, in a case of Destination Mode subfield value = 1, any of AP 100 and another terminal (for example, a P2P terminal) may be configured as a transmission destination for which the transmission and reception using the allocated radio resource to terminal 200 indicated by AID12 subfield illustrated in FIG. 12 are allowed. For example, in a case where Destination Mode subfield value = 1, uplink transmission to AP 100 may be allowed.

Note that, the association between the Destination Mode subfield value and the transmission destination for which the transmission and reception using the allocated radio resource are allowed (for example, a P2P terminal, or AP 100 and a P2P terminal) is not limited to the example illustrated in FIG. 15. For example, as the configuration of the transmission destination, a configuration may be used in which the transmission and reception with AP 100 are allowed and the transmission and reception with a P2P terminal are not allowed.

Further, in a case where Destination Mode subfield value = 1, the transmission destination of a signal to be transmitted from terminal 200 and the time length of the transmission signal may be determined by, for example, terminal 200.

For example, in a case where the transmission band of terminal 1 of the plurality of terminals 200 (for example, including terminal 1 and terminal 2) to which the TXOP sharing is indicated by one MU-RTS TXS Trigger frame is configured to Primary 20-MHz, the transmission band of terminal 2 may be configured in a frequency resource that includes no primary channel. In this case, terminal 2 may, for example, respond to the MU-RTS TXS Trigger frame and transmit a CTS frame and data using the frequency resource that includes no primary channel (for example, the band indicated to terminal 2).

Further, terminal 200 that has received the MU-RTS TXS Trigger frame may transmit a CTS frame based on the carrier sense result in a frequency resource for CTS indicated by the MU-RTS TXS Trigger frame, for example. For example, when the frequency resource for CTS indicated by the MU-RTS TXS Trigger frame includes no primary channel, terminal 200 may transmit a CTS frame in the indicated frequency resource even when the primary channel is busy.

For example, base station 100 may receive a response signal (CTS frame) to the MU-RTS TXS Trigger frame in an allocated band for each terminal 200 indicated by the MU-RTS TXS Trigger frame (for example, a transmission band for terminal 200 or a frequency resource for CTS).

Note that, the method of indicating the allocated channel is not limited to a case where a frequency resource position of 20-MHz×N allocated to terminal 200 is indicated as described above, and may be a method of indicating another frequency resource.

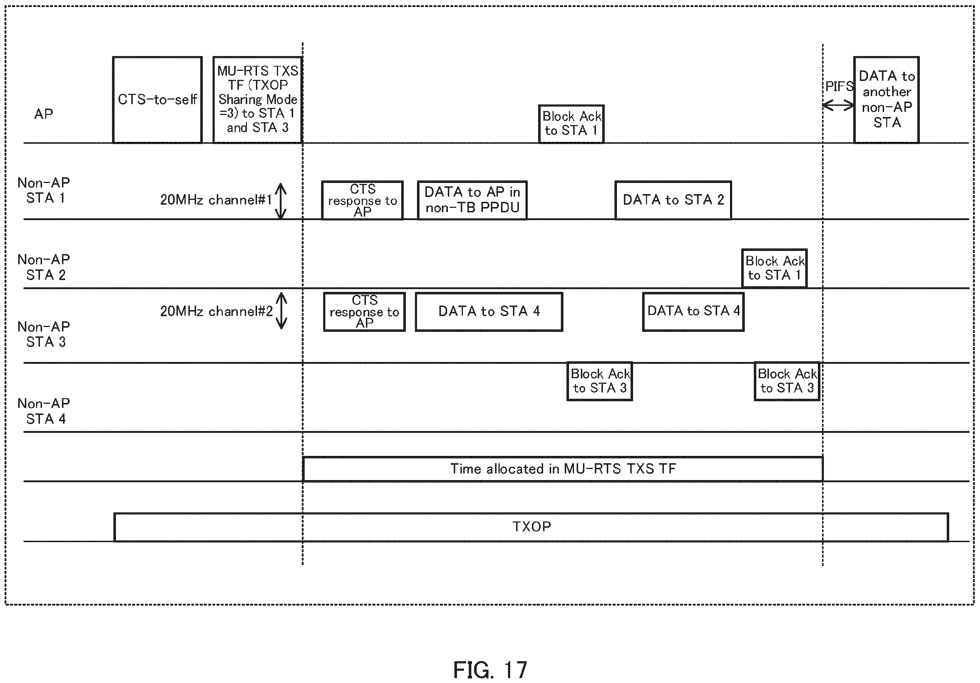

FIG. 17 is a diagram illustrating an exemplary sequence in a case where the TXOP sharing for a plurality of terminals is indicated and a transmission destination for which the transmission and reception using the allocated radio resource are allowed is indicated to each terminal 200.

In FIG. 17, AP 100 (referred to as "AP") may, for example, indicate information on a TXOP sharing mode to a plurality of terminals 200 (referred to as Non-AP STA 1 (hereinafter, terminal 1) and Non-AP STA 3 (hereinafter, terminal 3) in FIG. 17) different from AP 100, as terminal common information.

For example, the plurality of terminals 200 to which the TXOP sharing for multiple terminals is applied may be terminals for which a P2P is configured (for example, TDLS or Direct link has been configured). In the example illustrated in FIG. 17, the P2P link is configured in advance (for example, TDLS is configured) between terminal 1 and Non-AP STA 2 (hereinafter, terminal 2), and the P2P link is configured in advance (TDLS is configured) between terminal 3 and Non-AP STA 4 (hereinafter, terminal 4). For example, in FIG. 17, AP 100 may indicate TXOP sharing for the multiple terminals to terminal 1 and terminal 3 by indicating the TXOP sharing mode subfield value = 3 illustrated in FIG. 11.

Further, in FIG. 17, for example, AP 100 may indicate as the terminal-specific information, to each of the plurality of terminals 200 (for example, terminal 1 and terminal 3), the transmission destination information (for example, permission for communication with any of another terminal and AP 100, or permission for communication with another terminal) for which the transmission and reception using the allocated radio resource are allowed, the information on the allocated channel (for example, RU allocation), and the information on the allocated period (for example, Time allocated in MU-RTS TXS TF illustrated in FIG. 17). Note that, the same period is indicated as the allocated period for terminal 1 and terminal 3 in the example in FIG. 17.

For example, in FIG. 17, AP 100 may indicate terminal 2 or AP 100 as a transmission destination for which the transmission and reception using the allocated radio resource are allowed, by notifying terminal 1 of Destination Mode subfield value = 1 using the MU-RTS TXS Trigger frame. Further, for example, in FIG. 17, AP 100 may indicate terminal 4 as a transmission destination for which the transmission and reception using the allocated radio resource are allowed, by notifying terminal 3 of Destination Mode subfield value = 0 using the MU-RTS TXS Trigger frame. In other words, in FIG. 17, AP 100 permits terminal 1 to perform uplink transmission to AP 100, and does not permit terminal 3 to perform uplink transmission to AP 100.

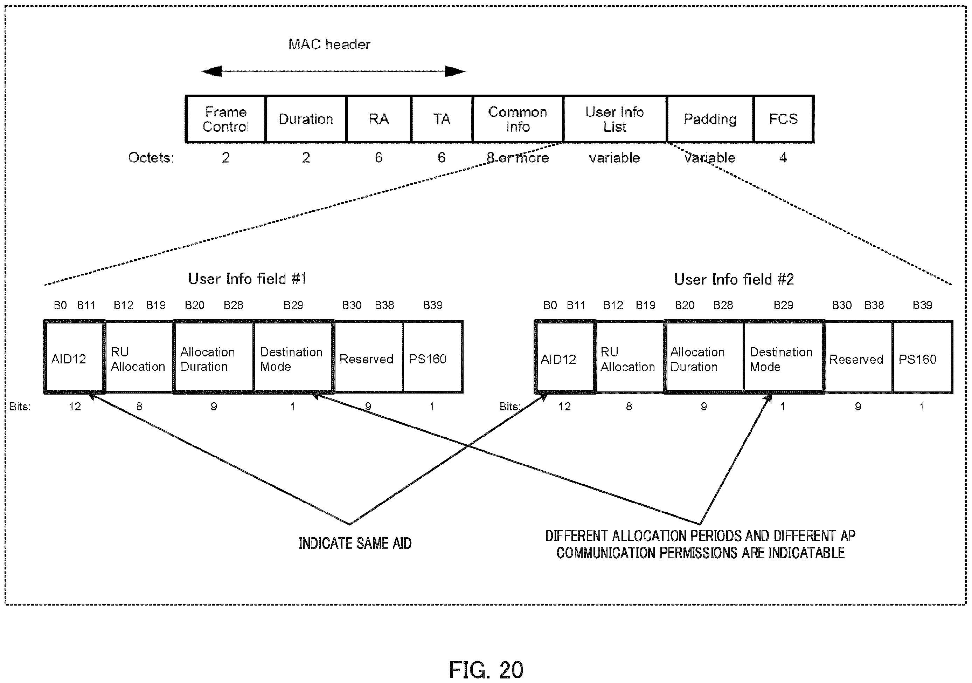

Further, in FIG. 17, AP 100 may indicate terminal 1 and terminal 3 to perform communication with orthogonal frequency resources (20-MHz×N channel). In the example illustrated in FIG. 17, 20-MHz channel #1 is indicated to terminal 1, and 20-MHz channel #2 is indicated to terminal 3.

In FIG. 17, for example, terminal 1 and terminal 3 may transmit, based the received MU-RTS TXS Trigger frame, a CTS frame (CTS response) to AP 100 and a data signal (DATA) to each transmission destination in each of the allocated channels of terminal 1 and terminal 3 in the allocated period of the TXOP sharing.

For example, in FIG. 17, terminal 1 may transmit a CTS frame to AP 100 in 20-MHz channel #1 indicated, and then may transmit a data signal (for example, SU PPDU) to AP 100, which is allowed as one of the transmission destination. Further, for example, in FIG. 17, terminal 3 may transmit a CTS frame to AP 100 in 20-MHz channel#2 indicated, and then may transmit a data signal to terminal 4, which is allowed as the transmission destination.

As described above, AP 100 may, for example, cause each terminal 200 to transmit (for example, transmit in response) a CTS frame in the allocated band indicated by the MU-RTS TXS Trigger frame (including, for example, a band that does not include a Primary channel). Thus, for example, AP 100 can grasp the start of communication by scheduled terminal 200 in the allocated period (for example, an indication from AP 100 is normally transmitted), by receiving a CTS frame in the allocated band indicated by the MU-RTS TXS Trigger frame.

Further, for example, in the example illustrated in FIG. 17, among terminal 1 and terminal 3 to which the TXOP sharing is applied, terminal 1 is allowed to perform communication with AP 100, whereas terminal 3 is not allowed to perform communication with AP 100, in the allocated period for TXOP Sharing.

With this configuration, AP 100 communicates with one terminal 200 (for example, terminal 1) of terminal 1 and terminal 3 to which the TXOP sharing is applied in the allocated period for the TXOP sharing (for example, reception of a data signal and transmission of an ACK). For example, in the example illustrated in FIG. 17, AP 100 communicates with terminal 1 and does not communicate with other terminals 2 to 4 that are different from terminal 1, in the allocated period for the TXOP sharing. Thus, in AP 100, for example, it is possible to prevent the transmission timing of a signal (for example, Block Ack) to terminal 1 from overlapping with the reception timing of a signal from another terminal (for example, any of terminal 2 to terminal 4), as illustrated in FIG. 17. Further, in AP 100, it is possible to prevent, for example, the reception timing of a signal from terminal 1 from overlapping with the transmission timing of a signal to another terminal (for example, any of terminal 2 to terminal 4).

As described above, in the present embodiment, AP 100 generates and transmits a Trigger frame that indicates uplink transmission from a plurality of terminals, the Trigger frame including transmission destination information on the transmission destination of uplink transmission for each of the plurality of terminals 200. For example, AP 100 indicates the transmission destination information for the plurality of terminals 200 (for example, presence or absence of permission for uplink transmission to AP 100) such that AP 100 communicates with one terminal 200 of the plurality of terminals 200 to which the TXOP sharing is applied, in the allocated period for the TXOP sharing.

Thus, it is possible to indicate the TXOP sharing to the plurality of terminals 200 using one Trigger frame, thereby improving the allocation efficiency in the TXOP sharing.

Further, in the present embodiment, it is possible to control the transmission destination in the time resource subjected to the TXOP sharing for each of the plurality of terminals 200 (for example, P2P terminals) appropriately, for example, thus preventing the transmission timing and the reception timing for the plurality of terminals 200 from overlapping with each other in AP 100. Thus, for example, it is possible to prevent an ACK frame to be transmitted from AP 100 to a certain terminal 200 and an SU PPDU frame to be transmitted from another terminal 200 to AP 100 from overlapping with each other. For this reason, it is possible to prevent the retransmission of an SU PPDU by another terminal 200 due to the inability of AP 100 to receive the SU PPDU frame from the other terminal 200, thereby improving the efficiency in utilization of a time resource to be allocated by AP 100.

Further, in FIG. 17, at least some of the radio parameters used for the TXOP sharing may be determined (or scheduled) by terminal 200 without being scheduled by AP 100, for example, so that the TXOP sharing for the plurality of terminals 200 can be realized with simple processing.

Thus, according to the present embodiment, it is possible to enhance the allocation efficiency in the TXOP sharing in radio communication.

Note that, for example, in a case where a function of self-interference suppression is held, it is not required to suppress overlap of the transmission timing and the reception timing in AP 100. For example, in FIG. 17, AP 100 may indicate, to both terminal 1 and terminal 3, Destination Mode subfield value = 1 using the MU-RTS TXS Trigger frame in a case where the function of self-interference suppression is held. Thus, for example, for both terminal 1 and terminal 3, an another terminal (terminal 2 or terminal 4) or AP 100 is indicated as a transmission destination for which the transmission and reception using the allocated radio resource are allowed; hence, both terminal 1 and terminal 3 can flexibly select the transmission destination for the uplink transmission.

Further, in the present embodiment, AP 100 indicates, to terminal 200, the TXOP sharing for a plurality of terminals based on the MU-RTS TXS Trigger frame format agreed in 11be Release 1 (for example, the format defined in 11be Release 1). Thus, a common Trigger frame format can be applied to, for example, a terminal that supports the TXOP sharing for one terminal and complies with 11be Release 1 (for example, referred to as an 11be Release 1-supporting terminal) and terminal 200 that supports the TXOP sharing for a plurality of terminals in the present embodiment (for example, referred to as a future version-supporting terminal). For example, AP 100 can indicate a TXOP sharing mode for the 11be Release 1-supporting terminal by making a configuration (for example, configuration limited to some values) of the TXOP sharing mode (for example, the value is any of 0, 1, and 2) supported by the 11be Release 1-supporting terminal, using the MU-RTS TXS Trigger frame format described in the present embodiment.

### (Variation 1 of Embodiment 1)

In the example illustrated in FIG. 17, a case where the transmission destination information indicates a transmission destination for which transmission and reception using an allocated radio resource are allowed, targeting the entire allocated period for the plurality of terminals 200 has been described. For this reason, in the example illustrated in FIG. 17, in a case where each of terminal 1 and terminal 3 holds the transmission data to AP 100 in a buffer, terminal 3 does not transmit the transmission data to AP 100 in the allocated period for the TXOP sharing since the transmission to AP 100 is not allowed. The indication content in the transmission destination information is not limited to this.

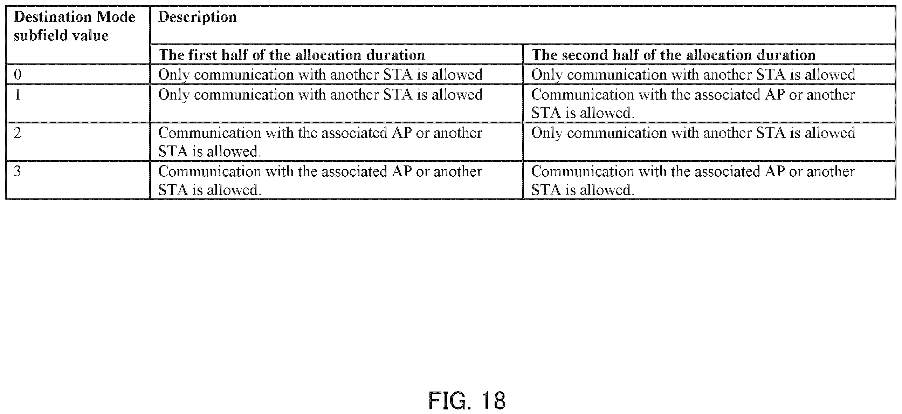

In Variation 1, for example, the terminal-specific information indicated by AP 100 may include, as illustrated in FIG. 18, the information on the transmission destination for which the transmission and reception using the allocated radio resource are allowed, for each portion of the allocated period for the TXOP sharing. For example, the transmission destination information may indicate the transmission destination of uplink transmission in each of a plurality of portions (or times) obtained by dividing the allocated period for the TXOP sharing (part of time of the TXOP sharing).

In the example illustrated in FIG. 18, the transmission destination information (for example, information in the Destination Mode subfield) may indicate, after the allocated period is divided into a first half and a latter half, a transmission destination for which the transmission and reception using the allocated radio resource in each of the first half and the latter half of the allocated period.

For example, in FIG. 18, when the value of the Destination Mode subfield is 0, communication with AP 100 in both the first half and the latter half of the allocated period is configured as not allowed. In a case where the value of the Destination Mode subfield is 1, communication with AP 100 in the first half of the allocated period is configured as not allowed while communication with AP 100 in the latter half of the allocated period is configured as allowed. In a case where the value of the Destination Mode subfield is 2, communication with AP 100 in the first half of the allocated period is configured as allowed while communication with AP 100 in the latter half of the allocated period is configured as not allowed. In a case where the value of the Destination Mode subfield is 3, the communication with AP 100 in both the first half and the latter half of the allocated period is configured as allowed.

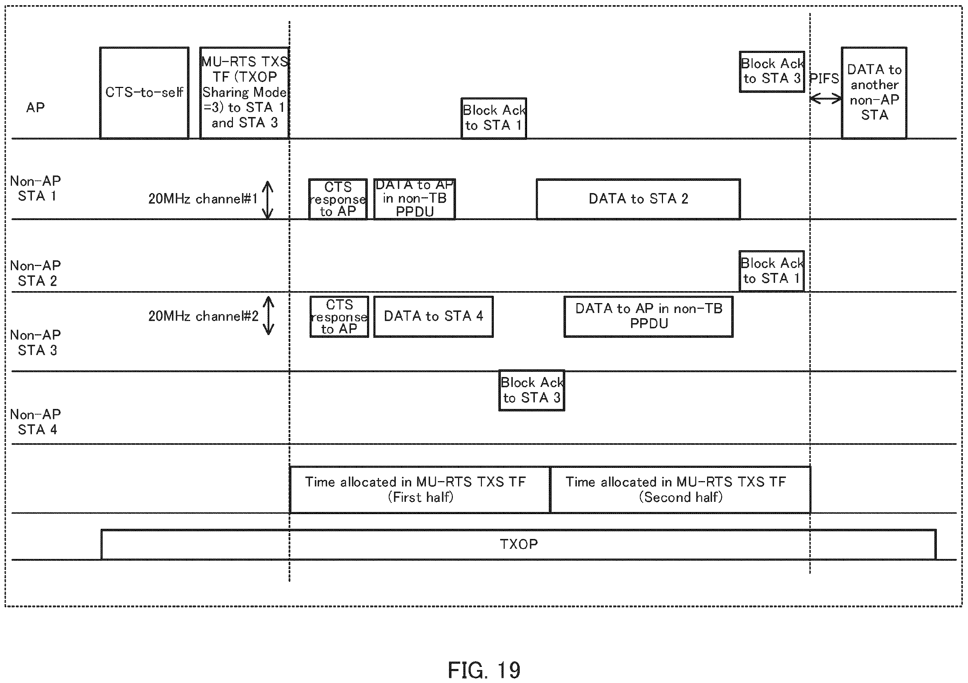

FIG. 19 is a diagram illustrating another exemplary sequence in a case where the TXOP sharing for a plurality of terminals is indicated and a transmission destination for which the transmission and reception using the allocated radio resource are allowed is indicated to each terminal 200.

In the example illustrated in FIG. 19, AP 100 communicates (for example, receives a data signal and transmits an ACK) with one terminal of terminal 1 and terminal 3 to which the TXOP sharing is applied in each portion (first half and latter half) of the allocated period for the TXOP sharing. For example, AP 100 may indicate, to terminal 1, Destination Mode subfield value = 2 and indicate, to terminal 3, Destination Mode subfield value = 1 using the MU-RTS TXS Trigger frame. Thus, as illustrated in FIG. 19, AP 100 communicates with terminal 1 and does not communicate with other terminal 2, terminal 3, and terminal 4 that are different from terminal 1, in the first half of the allocated period for the TXOP sharing. Further, as illustrated in FIG. 19, AP 100 communicates with terminal 3 and does not communicate with other terminal 1, terminal 2, and terminal 4 that are different from terminal 3, in the latter half of the allocated period for the TXOP sharing.

As described above, in Variation 1, AP 100 indicates such that communication with one terminal 200 among the plurality of terminals 200 to which the TXOP sharing is applied is performed in the allocated period for the TXOP sharing, thereby preventing the transmission and reception timings in AP 100 from overlapping with each other. Further, in Variation 1, as illustrated in FIG. 19, separating a period in which transmission to AP 100 is allowed in the allocated period for the TXOP sharing makes it possible for each of the plurality of terminals 200 to transmit the transmission data to AP 100 even in a case where each of the plurality of terminals 200 to which the TXOP sharing is applied (for example, terminal 1 and terminal 3) holds the transmission data to AP 100 in the buffer.

Note that, in FIGS. 18 and 19, the case has been described where the allocated period for the TXOP sharing is equally divided into two portions, a front half and a latter half, but the method of configuring a portion obtained by dividing the allocated period for the TXOP sharing is not limited to this case. For example, the number of divisions of the allocated period is not limited to two portions, and the allocated period may be divided into three or more periods (or portions). Further, the allocated period may be divided unequally, without limitation to the equal division.

Further, in FIG. 18, as an example, a case has been described where transmission to another terminal is allowed regardless of the value of the Destination Mode subfield, but the present disclosure is not limited to this case, and the presence or absence of permission for transmission to another terminal may be configured in accordance with the value of the Destination Mode subfield. For example, the transmission to AP 100 may be allowed while the transmission to another terminal may be configured as not allowed in any of the values of the Destination Mode subfield.

### (Variation 2 of Embodiment 1)

In Variation 1, for each portion in an allocated period of TXOP sharing, as a method of notifying transmission destination information indicating a transmission destination with which transmission and reception using the allocated radio resource is permitted, as illustrated in FIG. 18, a case is described, in which a combination of presence or absence for permission of transmission and reception in each portion in the allocated period and association with a value of Destination Mode subfield are defined. However, the present invention is not limited thereto.

In Variation 2, AP 100 may notify same terminal 200 of a plurality of User Info fields, which correspond to each of a plurality of portions of the allocated period, as transmission destination information indicating a transmission destination with which transmission and reception using an allocated radio resource for each portion of the allocated period of TXOP sharing is permitted. For example, AP 100 may indicate, for same terminal 200, a transmission destination information (for example, Destination Mode) indicating presence or absence of permission for transmission and reception using the allocated radio resource for each Allocation Duration in the plurality of User Info fields (for example, for each portion of the allocated period).

For example, as illustrated in FIG. 20, a plurality of User Info fields to which the same AID (or, duplicated AID) is set may be disposed in one Trigger frame. For example, each of the plurality of User Info fields corresponds to a different period (portion) within the allocated period, and a different value can be set as the transmission destination information in each User Info field (for example, the value of the Destination Mode subfield).

Thus, for example, in a case where each of terminal 1 and terminal 3 holds transmission data for AP 100 in a buffer as in the example of FIG. 19, the allocated period for which the transmission to AP 100 is allowed can be flexibly set (for example, divided) according to the buffer amount of the transmission data in each of terminal 1 and terminal 3. Thus, according to modification example 2, data transmission efficiency when transmitting data to AP 100 can be improved.

### (Embodiment 2)

In the present embodiment, a case where TXOP sharing is performed for a plurality of terminals (for example, STAs) with different allocated periods will be described.

A radio communication system according to the present embodiment may include AP 100 and terminal 200 in the same manner as in Embodiment 1.

For example, AP 100 can improve the efficiency in utilizing a radio resource and can improve the system performance by configuring an allocation time different for each terminal 200 in accordance with the transmission buffer amount of each terminal 200 performing P2P (for example, P2P terminal).

For example, in the TXOP sharing, the efficiency in utilizing a resource for an allocated period may decrease depending on a configuration of a Secondary channel and an allocated period.

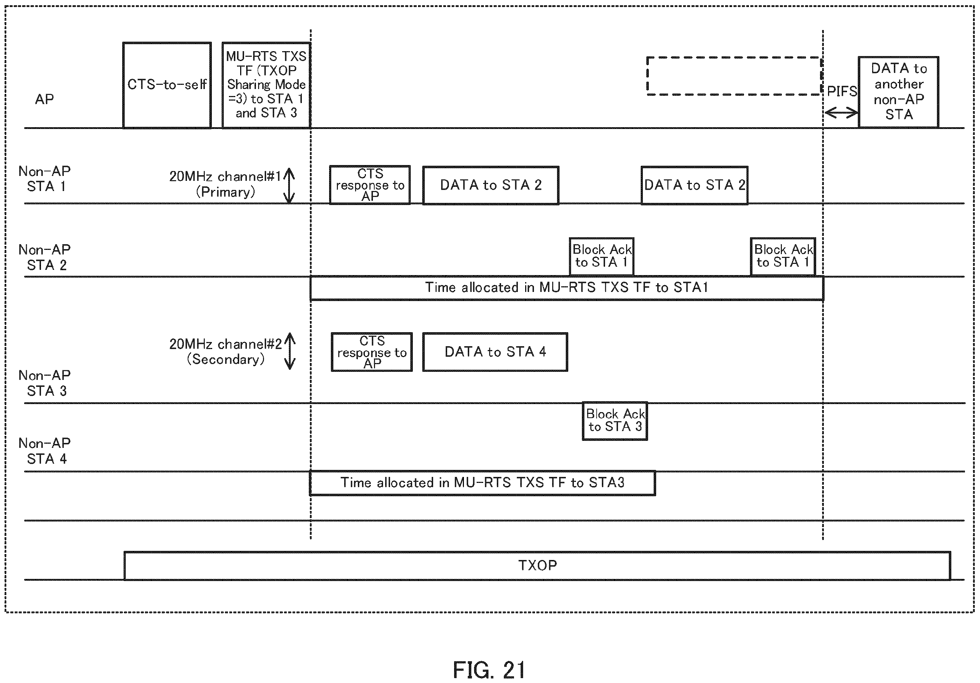

By way of example, as illustrated in FIG. 21, a case where 20-MHz channel#1 (Primary channel) is allocated to terminal 1 (Non-AP STA 1) and 20-MHz channel#2 (Secondary channel) is allocated to terminal 3 (Non-AP STA 3) will be described. As illustrated in FIG. 21, the allocated period (Time allocated in MU-RTS TXS TF) configured for each of terminal 1 and terminal 3 is different from each other. For example, the allocated period configured for terminal 3 is shorter than the allocated period configured for terminal 1.

In this case, after the allocated period in 20-MHz channel #2 (Secondary channel) for terminal 3 ends, the radio resource (allocated band) in 20-MHz channel #2 (Secondary channel) illustrated with broken lines becomes an available resource, and the radio resource in 20MHz channel #1 (Primary channel) is used by terminal 1, as illustrated in FIG. 21. Accordingly, since the Primary channel is in use by terminal 1, the carrier sense result at AP 100 becomes Busy, and thus, there is a possibility that AP 100 cannot transmit a signal with a resource corresponding to the Secondary channel despite that the radio resource (allocated band) in 20-MHz channel #2 (Secondary channel) is an available resource (for example, the carrier sense result is Idle), which may reduce the system performance.

In the present embodiment, a description will be given of a method of performing efficiently the TXOP sharing for the plurality of terminals 200 with different allocated periods, using one MU-RTS TXS Trigger frame.

### [Configuration of Base Station]

An exemplary configuration of AP 100 according to the present embodiment may be the same as that in FIG. 10. For example, the operation of scheduler 101 in AP 100 according to the present embodiment may be different from that in Embodiment 1.

Scheduler 101 determines, based on the terminal information inputted from terminal information holder 110, an allocated period and an allocated radio resource to be applied to terminal 200, for example.

For example, scheduler 101 may determine the allocated period for each of terminals 200 in accordance with a transmission buffer amount of terminal 200, which is the scheduling target. Further, for example, scheduler 101 may cause the allocated band to be more easily allocated to a Primary channel (20-MHz×N channel including 20-MHz primary channel) for terminal 200 with a shorter determined allocated period among the plurality of terminals 200 to be scheduled using one MU-RTS TXS Trigger frame. For example, scheduler 101 may allocate a Primary channel to terminal 200, the allocated period of which is the minimum, and may allocate a Secondary channel to other terminals 200 among the plurality of terminals 200 to be scheduled using one MU-RTS TXS Trigger frame. Thus, in the allocated period of the TXOP sharing (for example, a part of time of TXOP), an allocated time for terminal 200 allocated to the Primary channel is shorter than an allocated time for terminal 200 allocated to the Secondary channel, among plurality of terminals 200.

Further, scheduler 101 may determine, based on, for example, a difference in allocation time to the plurality of terminals 200, the data length (for example, PPDU length) to be transmitted after the allocated period in the Primary channel ends. For example, scheduler 101 may determine the data length (for example, PPDU length) based on a difference between the allocated period in the Secondary channel and the allocated period in the Primary channel among the allocation times to the plurality of terminals 200. For example, the PPDU length transmitted after the allocated period in the Primary channel ends may be determined based on the difference between the maximum allocated period and the minimum allocated period of terminals 200, which are the scheduling targets.

Processing of the other components in AP 100 may be the same as the processing in Embodiment 1, for example.

### [Configuration of Terminal]

An exemplary configuration of terminal 200 according to the present embodiment may be the same as that in FIG. 16. For example, in terminal 200 according to the present embodiment, the operation of demodulator 202 may be different from that in Embodiment 1.

For example, in Embodiment 1, demodulator 202 performs demodulation processing in the Primary channel determined by AP 100 to be connected and, in a case where the modulated signal is not a signal to terminal 200, demodulator 202 does not perform demodulation processing in the Secondary channel.

In the present embodiment, for example, in a case where TXOP Sharing for a plurality of terminals 200 is applied in an MU-RTS TXS Trigger frame, PPDU transmission to the Secondary channel that includes no Primary channel may be allowed in the TXOP period acquired by AP 100 (for example, the period indicated in the UL Length subfield of the terminal common information in the Trigger Frame).

Accordingly, in the present embodiment, AP 100 and terminal 200 are allowed to perform communication via the Secondary channel that includes no Primary channel in a time period of TXOP of AP 100 or a time period indicated by the MU-RTS TXS Trigger frame (for example, the UL length subfield), for example,.

In terminal 200, demodulator 202 may perform the same demodulation processing in the Secondary channel in addition to the Primary channel, for example. For example, demodulator 202 may perform the demodulation processing in the Secondary channel regardless of whether or not the signal that is demodulated in the Primary channel is a signal addressed to terminal 200.

Note that, in order to reduce the amount of processing in terminal 200, terminal 200 that performs the decoding processing in the Secondary channel may be limited to terminal 200 indicated in the User Info subfield of the MU-RTS TXS Trigger frame.

The processing in other components in terminal 200 may be the same as the processing in Embodiment 1, for example.

### [Operation Examples of AP 100 and Terminal 200]

Next, operation examples of AP 100 and terminal 200 according to the present embodiment will be described.

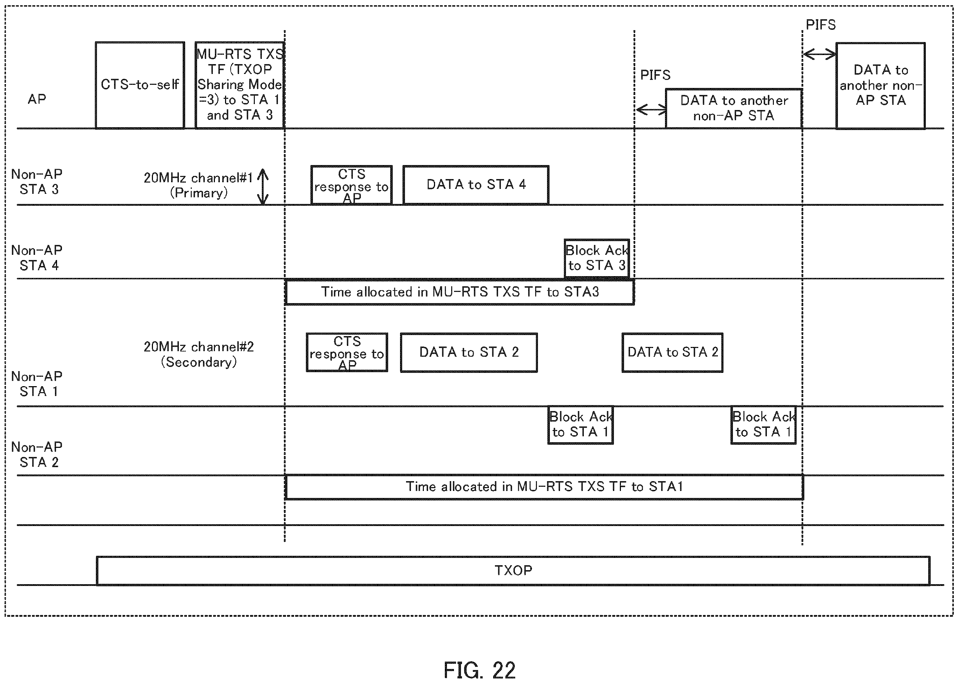

FIG. 22 is a diagram illustrating still another exemplary sequence in a case where the TXOP sharing for a plurality of terminals 200 is indicated and a transmission destination for which the transmission and reception using the allocated radio resource are allowed is indicated to each terminal 200.

In FIG. 22, for example, AP 100 (referred to as "AP") may indicate information on a TXOP sharing mode to a plurality of terminals 200 (terminal 1 and terminal 3 in FIG. 22) different from AP 100, as the terminal common information.

For example, the plurality of terminals 200 to which the TXOP sharing for the multiple terminals is applied may be terminals for which a P2P is configured (for example, TDLS or Direct link has been configured). In the example illustrated in FIG. 22, the P2P link is configured in advance (for example, TDLS is configured) between terminal 1 and terminal 2, and the P2P link is configured in advance (TDLS is configured) between terminal 3 and terminal 4. For example, in FIG. 22, AP 100 may indicate the TXOP sharing for the multiple terminals to terminal 1 and terminal 3 by indicating TXOP sharing mode subfield value = 3 illustrated in FIG. 11.

Further, in FIG. 22, for example, AP 100 may indicate the transmission destination information (for example, Destination Mode) for which the transmission and reception using the allocated radio resource are allowed, the information on the allocated channel (for example, RU allocation), and the information on the allocated period, as the terminal-specific information for each of the plurality of terminals 200 (for example, terminal 1 and terminal 3).

For example, in the example illustrated in FIG. 22, AP 100 may indicate, to terminal 3 with a smaller transmission buffer amount, a shorter allocated period (Time allocated in MU-RTS TXS TF to STA3 in FIG. 22) than the allocated period for terminal 1 (Time allocated in MU-RTS TXS TF to STA1 in FIG. 22). Thus, in the example illustrated in FIG. 22, the allocated period for terminal 3 is shorter than the allocated period for terminal 1.

Then, AP 100 may configure the allocated band for terminal 3 as a Primary channel (20-MHz channel #1), and configure the allocated bands for other terminals 200 (for example, including terminal 1) as a Secondary channel (for example, including 20-MHz channel #2).

Thus, after the allocated period for terminal 3 in the Primary channel ends, AP 100 can transmit a signal to another terminal via the Primary channel, which is an empty resource, even in a case where the Secondary channel is used as long as the result of the Carrier Sense at a predetermined time (for example, PIFS) is Idle, as illustrated in FIG. 22. Thus, according to the present embodiment, it is possible to effectively utilize a radio resource after the allocated period for a part of terminals 200 ends in the TXOP sharing in which the allocated periods are different for the plurality of terminals 200, thereby improving the efficiency in resource utilization and improving the system performance.

Further, for example, AP 100 may configure the data length (PPDU length) to be transmitted after the end of the allocated period in the Primary channel to the difference between the maximum allocated period and the minimum allocated period between terminals 200 that are scheduled. In the example of FIG. 22, AP 100 may determine the PPDU length based on the difference between the allocated period for terminal 1 and the allocated period for terminal 3. This makes it possible to utilize an available resource effectively, thereby improving the system performance.

Further, for example, in the remaining TXOP period after the allocated periods for all terminals 200 end, AP 100 may transmit a signal, using the entire band of the transmission band for the Trigger frame including the Secondary 20-MHz channel. Thus, a radio resource can be effectively utilized in the TXOP sharing in which the allocated periods are different for the plurality of terminals 200, thereby improving the system performance.

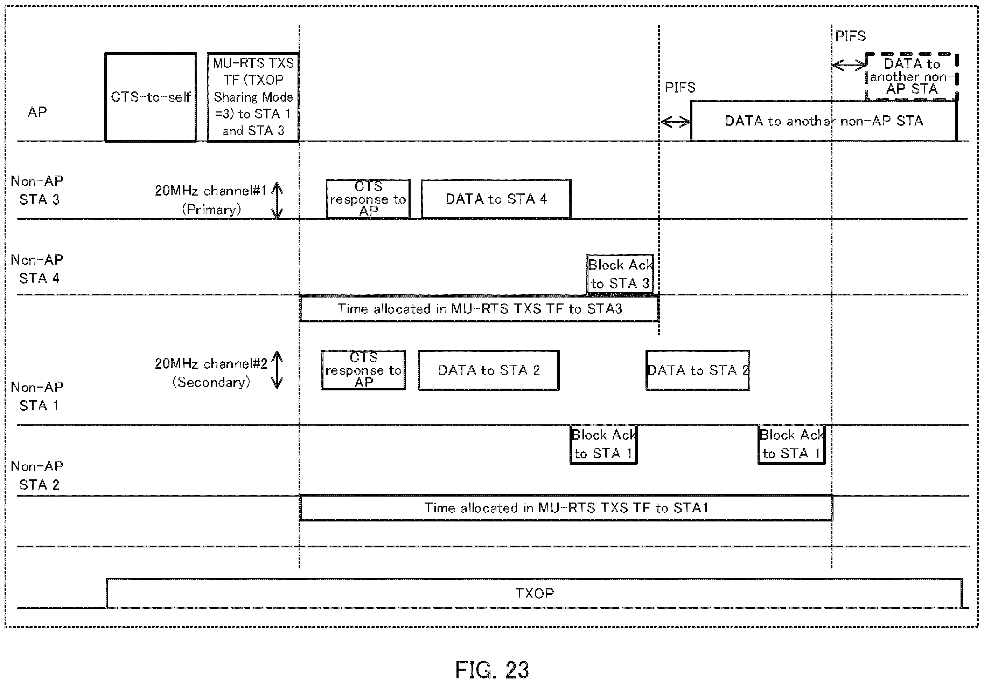

For example, AP 100 may transmit a signal for another terminal via the Primary channel after the allocated period for terminal 3 ends, as illustrated in FIG. 23.

Subsequently, AP 100 may transmit a signal also via the Secondary channel in the remaining TXOP period after the allocated periods of all terminals 200 (for example, terminal 1 and terminal 3) end, in addition to via the Primary channel. At this time, AP 100 may transmit a PPDU via a Secondary channel that includes no Primary channel, for example, as illustrated in FIG. 23. Further, terminal 200 may perform the decoding processing in the Secondary channel regardless of the result of decoding on the Primary channel, for example.

As illustrated in FIG. 23, even in a case where the Primary channel is allocated to another terminal after the allocated period for terminal 3 ends, AP 100 can perform communication via the Secondary channel that includes no Primary channel after the allocated period for terminal 1 in the Secondary channel ends.

Thus, AP 100 can transmit a signal via the Secondary 20-MHz channel in the remaining TXOP period after the allocated periods for all terminals 200 end. Thus, according to the present embodiment, it is possible to effectively utilize a radio resource and to improve the system performance.

Further, for example, in FIG. 23, when terminal 200 that performs the decoding processing in the Secondary channel is limited to terminal 200 indicated in the User Info subfield of the MU-RTS TXS Trigger frame, the signal transmitted via the Secondary channel may be a signal addressed to terminal 1 or terminal 3. When the TXOP Sharing for multiple terminals is indicated, terminal 200 may perform the decoding processing in the Secondary channel in addition to on the Primary channel in a TXOP period indicated by a Trigger frame.

Note that, in the examples illustrated in FIGS. 22 and 23, a case in which the number of terminals 200 to which the TXOP sharing is applied is two has been described, but the present disclosure is not limited to this case, and the number of terminals may be three or more.

Further, in the examples illustrated in FIGS. 22 and 23, a case where the PPDU length is determined based on the difference between the maximum allocated period and the minimum allocated period in the allocated period for terminal 200 to which the TXOP sharing is applied has been described, but the present disclosure is not limited to this case. For example, the PPDU length may be determined based on a difference between the allocated period for the Primary channel and the allocated period longer than the allocated period for the Primary channel among the allocated periods for terminal 200 to which the TXOP sharing is applied.

Further, in the examples illustrated in FIGS. 22 and 23, a case has been described where, among terminals 200 to which the TXOP sharing is applied, the allocated band for terminal 200, for which the minimum allocated period is configured, is configured in the Primary channel, but the present disclosure is not limited to this case. For example, the above-described embodiments may be applied between a Primary channel and a Secondary channel in which an allocated period longer than the allocated period in the Primary channel is configured.

The embodiments of the present disclosure have been each described, thus far.

### (Other Embodiments)

(1) In Embodiments 1 and 2, exemplary transmission and reception via a Secondary channel (e.g., a channel includes no Primary 20-MHz channel) has been described, but the following configuration examples may be applied as a method of configuring a Secondary channel.

### <Configuration Example 1>

In Configuration Example 1, terminal 200 that is scheduled by the MU-RTS TXS Trigger frame may perform transmission in the P2P link in a band indicated by the Trigger frame in a period in which the TXOP sharing is performed. For example, in a case where the band indicated by the Trigger frame is a band including a Secondary channel (or a band not including a Primary channel), terminal 200 may perform transmission in the P2P link in the band.

For example, in Configuration Example 1, the same rule as that for the UL MU transmission using an existing Trigger frame (for example, Basic Trigger or the like) may be applied. As described above, in Configuration Example 1, it is possible to easily realize transmission via a Secondary channel by applying an existing rule.

### <Configuration Example 2>

In Configuration Example 2, terminal 200 to which AP 100 allocates the Secondary channel is a terminal for which a Sub-Channel Selective (SST) Mode is configured (for example, referred to as an SST terminal).

AP 100 may, for example, indicate, to the SST terminal, transmission via the Secondary channel configured in the SST Mode in the TXOP sharing period, using the MU-RTS TXS Trigger frame that indicates the TXOP Sharing.

For example, similar to in 11ax, the SST setup is established by a Trigger-enabled TWT negotiation, and AP 100 may indicate the transmission via the Secondary channel, using the MU-RTS TXS Trigger frame (for example, the extended MU-RTS TXS TF) according to Configuration Example 2 in the TWT period. As described above, in Configuration Example 2, it is possible to easily realize transmission via the Secondary channel through reuse of an existing function.

### <Configuration Example 3>

In Configuration Example 3, for the method of pre-indication of a channel to be used for transmission and reception in the allocated period subjected to the TXOP sharing, an Off-channel configuration mechanism (TDLS Channel Switch Request/Response frame) may be repurposed in which a channel via which transmission and reception are performed between terminals in P2P is negotiated in TDLS. As described above, in Configuration Example 3, transmission via the Secondary channel can be easily realized through reuse of an existing function.

### Configuration Examples 1 to 3 have been each described, thus far.

Note that, any of Configuration Examples 1 to 3 described above may be applied in combination. For example, in the combination of Configuration Example 1 and Configuration Example 2, terminal 200 to which AP 100 allocates the Secondary channel may be an SST terminal, and terminal 200 to which AP 100 allocates the Primary channel may be terminal 200 for which the SST Mode is not configured.

(2) In Embodiments 1 and 2, the TXOP Sharing for terminal 200 for which TDLS (P2P link) is configured has been described, but the following operation examples may be applied as an operation of the TXOP sharing related to TDLS.

### <Operation Example 1>

In Operation Example 1, in a case where the TXOP sharing is executed in a certain link among the plurality of links, a non-simultaneous transmit and receive (Non-STR) terminal for which TDLS is configured in a plurality of links may not transmit (or responds to) a CTS frame with respect to the RTS frame from AP 100 in another link.

Thus, for example, even in a case where the TXOP sharing is configured in the plurality of P2P links, it is possible to prevent the transmission timing and the reception timing of the Non-STR terminal from overlapping with each other.

### <Operation Example 2>

In Operation Example 2, a TDLS procedure for the TXOP sharing may be newly defined.

In existing TDLS, AP 100 may relay a Request frame and a response frame (hereinafter also referred to as Request/response frame) between P2P terminals. In this case, a configuration content in TDLS is exchanged with encapsulated data; thus, AP 100 need not decode the Request/response frame between the P2P terminals.

In Operation Example 2, in TDLS for the TXOP sharing, AP 100 may decode the content of the Request/response frame between the P2P terminals and interpret (or identify, understand) the content. For example, the Request/response frame for the TXOP sharing may include terminal information on the transmission destination of P2P communication (for example, a terminal ID, Capability information, and the like).

Thus, AP 100 can identify information on the P2P link, and thus, for example, can avoid indicating the TXOP sharing to a plurality of terminals 200 in which the terminal pairs (for example, communication counterparts) in the P2P links overlap. For example, when understanding, through interpretation of the Request/response frame between the P2P terminals, that the P2P link is configured between terminal 1 and terminal 2 and the P2P link is configured between terminal 1 and terminal 3, AP 100 may not simultaneously indicate the TXOP sharing to terminal 2 and terminal 3, each of which is a terminal pair with terminal 1.

Thus, in Operation Example 2, it is possible to prevent the transmission timing and the reception timing of the P2P terminal from overlapping with each other. In the case of the example described above, for terminal 1, overlapping of the transmission and reception timings between terminal 2 and terminal 3 can be prevented.

Further, in a case where the Off-channel (for example, a configuration in which P2P communication is performed outside an Operation band of AP 100) is implemented in the P2P link configuration, AP 100 can understand the Off-channel through the interpretation of the Request/response frame between the P2P terminals. A P2P terminal that performs the Off-channel cannot, for example, be scheduled in the Operation band of AP 100. Thus, AP 100 may exclude terminal 200 that performs the Off-channel from the scheduling target of the TXOP sharing. Thus, it is possible to enhance the scheduling efficiency of the TXOP sharing in AP 100.

### <Operation Example 3>

In Operation Example 3, the frame (for example, the type of the TDLS Action frame) to be indicated to or negotiated with AP 100 by terminal 200 may be defined.

In Operation Example 3, a new frame may be defined instead of utilizing the existing Request/response frame as in Operation Example 2 described above, for example. Thus, the information exchange illustrated in operation example 2 can be implemented more efficiently.

### Operation Examples 1 to 3 have been each described, thus far.

Note that, any of Operation Examples 1 to 3 described above may be applied in combination. For example, the combination of Operation Example 2 and Operation Example 3 allows a procedure in which a part of the information on TDLS used for the TXOP sharing is indicated to AP 100 with an existing TDLS frame, and the other information is indicated to AP 100 with a frame defined newly.

(3) In the above-described embodiments, Capability information indicating whether or not terminal 200 supports each mode of the TXOP sharing mode may be defined, and the defined information may be transmitted from terminal 200 to AP 100.

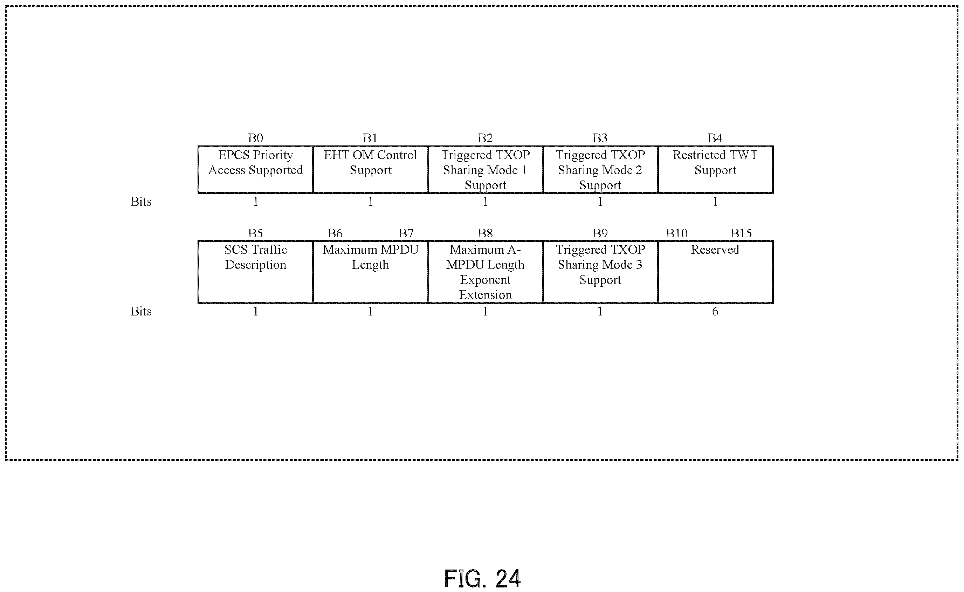

For example, when TXOP Sharing Mode 3 described in the above-described embodiments is configured, a subfield (for example, Triggered TXOP Sharing Mode 3 Support subfield) indicating whether or not terminal 200 supports TXOP Sharing Mode 3 may be configured in (for example, added to) a field to which the Capability information is indicated (for example, an EHT MAC Capabilities Information field) , as illustrated in FIG. 24.

For example, Triggered the TXOP Sharing Mode 3 Support subfield may be defined using a part of Reserved bits (B9 in the example illustrated in FIG. 24) in the existing EHT MAC Capabilities Information field.

Thus, AP 100 can indicate the TXOP Sharing in accordance with (for example, limiting to) the TXOP sharing mode that terminal 200 supports.

(4) In the above-described embodiments, in a case where signals of a plurality of terminals 200 are subjected to frequency division multiplexing (FDM), AP100 may indicate the maximum transmit power that can be transmitted by each terminal 200 (for example, in addition to terminal 200 to be scheduled, a P2P terminal that is the transmission destination of terminal 200 may be included) in the allocated period, causing the maximum transmit power to be included in the terminal-specific information (for example, User Info field) of the Trigger frame. Indication of the maximum transmit power that can be transmitted makes it possible to suppress adjacent channel interference in the frequency division multiplexing.

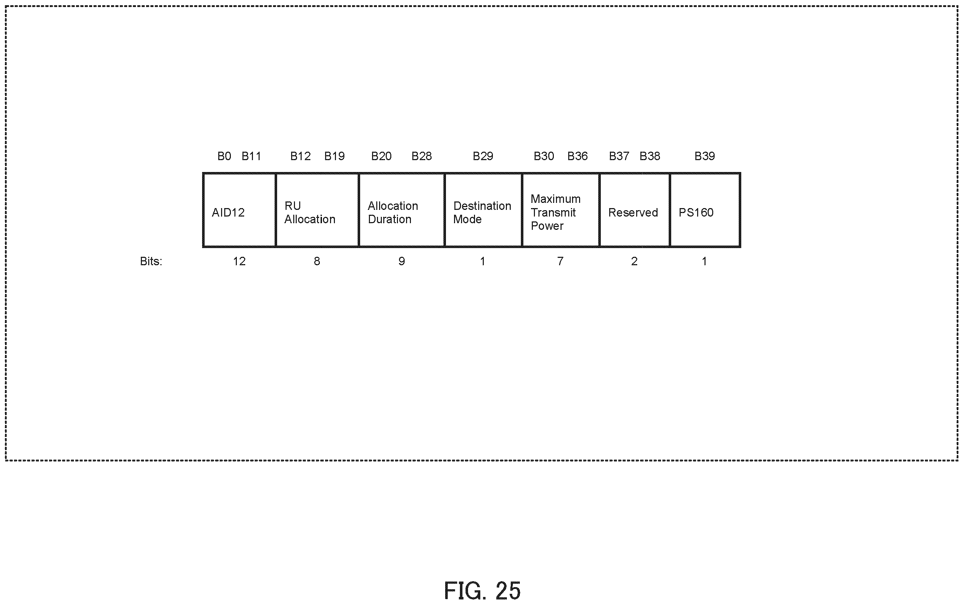

For example, as illustrated in FIG. 25, the maximum transmit power (Maximum Transmit Power subfield in FIG. 25) may be indicated using a part of the Reserved area in the User Info field (for example, FIG. 12) in each embodiment described above.

For example, AP 100 may determine the maximum transmit power for each terminal 200 based on path loss or reception power information between an AP and a P2P terminal that are fed back in advance from terminal 200.

(5) In the above-described embodiments, a case has been described where the TXOP sharing for a plurality of terminals is indicated from an AP, but the apparatus for indicating the TXOP sharing is not limited to an STA.

For example, the indication method of the TXOP sharing for a plurality of terminals from an AP described in Embodiments 1 and 2 may be applied to an indication method of radio resource (time resource and frequency resource) allocation from a Sharing AP to a Shared AP in Multi-AP Coordination transmission (a plurality of coordination communications).

The Multi-AP Coordination transmission includes, for example, "Coordinated-Frequency Division Multiple Access (FDMA)" where different frequency resources are allocated to a plurality of APs and "Coordinated-Time Division Multiple Access (TDMA)" where different time resources are allocated to a plurality of APs. In these types of Multi-AP Coordination transmission, the above-mentioned indication method using the MU-RTS TXS Trigger frame may be used for the radio resource allocation from a Sharing AP to a Shared AP.

For example, the TXOP sharing (radio resource allocation) from the AP described above to the plurality of terminals may be replaced with the radio resource allocation (including TXOP sharing) from the Shared AP to the plurality of Sharing APs in the communication in the Multi-AP Coordination transmission.

Further, the above-mentioned TXOP sharing (radio resource allocation) from an AP to a plurality of P2P terminals may be replaced with radio resource allocation (including TXOP sharing) from a Shared AP to a plurality of pairs of Sharing APs and STAs under the Sharing APs in the Multi-AP Coordination transmission

Further, in the Multi-AP Coordination transmission, when the MU-RTS TXS Trigger frame is used, a TXOP sharing mode for the Multi-AP Coordination transmission may be explicitly indicated. For example, the TXOP sharing mode for the Multi-AP Coordination transmission may be indicated in a Reserved area for the TXOP Sharing Mode of the Common Info field illustrated in FIG. 2. Alternatively, a subfield that indicates the TXOP sharing mode for the Multi-AP Coordination transmission may be provided as a subfield portion (e.g., subfield portion not used for CTS frame transmission) of the Common Info field.

(6) For each sequence diagram illustrated in the above-described embodiments, a case has been described, as an example, where a response is made to an MU-RTS TXS Trigger frame with a CTS frame, but an exemplary embodiment of the present disclosure is not limited to this. In one example, AP 100 may indicate the presence or absence of response with the CTS frame to terminal 200 by using a Trigger frame. This makes it possible to omit the response with the CTS frame from terminal 200 in an environment where a hidden terminal is expected to be less likely to occur, thus improving the throughput performance.

(7) In the above-described embodiments, the field in which each control information including the TXOP Sharing Mode, the Destination Mode, or the Maximum Transmit Power is placed is not limited to the field described above, and may be placed in another field. Further, the number of bits for indicating each control information including the TXOP Sharing Mode, the Destination Mode, or the Maximum Transmit Power is not limited to the examples described above, and may be any other number of bits.

Further, in the above-described embodiments, the field indicating an allocated period for the TXOP sharing is not limited to a UL Length subfield and may be other subfields.

Further, in the above-described embodiments, the configuration of a Trigger frame, and the configurations of a Common Info field and a User Info field in the Trigger frame are not limited to the above-described examples and may be other configurations in which, in the above-described fields, at least one of the addition of another subfield and the deletion of some subfields has been performed, for example.

For example, a plurality of terminals 200 to be assigned in the TXOP sharing may be signal-multiplexed in a resource different in at least one of a frequency resource and a time resource, in an allocated period.

Further, in the above-described embodiments, a case has been described, as an example, where an MU-RTS TXS Trigger frame is used for indication of a Sharing AP to multiple terminals, but a Trigger type for the indication of the Sharing AP to the multiple terminals is not limited to MU-RTS and may be other Trigger types or newly defined Trigger types in future versions.

Further, another terminal to which terminal 200 makes an indication in the P2P communication may be a terminal under AP 100 to which this terminal 200 is connected or may be any terminal under an AP different from AP 100 to which this terminal 200 is connected.

Further, in the above-described embodiments, a description has been given based on the format of 11be, as an example, but the format to which an exemplary embodiment of the present disclosure is applied is not limited to the format of 11be. An exemplary embodiment of the present disclosure may be applied to, for example, IEEE 802.11bd (Next Generation V2X (NGV)), which is the next-generation standard of IEEE 802.11p standard for automotive applications.

### (Supplements)

Information indicating whether terminal 200 supports the functions, operations, or processes that have been described in the above-mentioned embodiments may be transmitted (or indicated) from terminal 200 to AP 100, as capability information or a capability parameter of/for terminal 200, for example.

The capability information may include information elements (IEs) that individually indicate whether terminal 200 supports at least one of the functions, operations, or processes that have been described in the above-mentioned embodiments. Alternatively, the capability information may include information elements that indicate whether terminal 200 supports a combination of any two or more of the functions, operations, or processes that have been described in the above-mentioned embodiments. The information elements may be also simply called elements.

AP 100 may determine (or decide or assume), for example, based on the capability information received from terminal 200, the functions, operations, or processes that are supported (or not supported) by terminal 200, which is a transmission source of the capability information. AP 100 may execute operations, processes, or control in accordance with a determination result based on the capability information. By way of example, AP 100 may control, based on the capability information received from terminal 200, the TXOP sharing for multiple STAs.

Note that in a case where terminal 200 does not entirely support the functions, operations, or processes described in the above-mentioned embodiments, such an unsupported part of the functions, operations, or processes may be interpreted as a limitation in terminal 200. For example, information or a request relating to such limitation may be indicated to AP 100.

The information on the capability or the limitation of terminal 200 may be defined by standards or may be implicitly indicated to AP 100 in association with information known in AP 100 or information to be transmitted to AP 100, for example.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

An access point according to an exemplary embodiment of the present disclosure includes: control circuitry, which, in operation, generates a control signal that indicates uplink transmission from a plurality of terminals, the control signal including information on a transmission destination of the uplink transmission for each of the plurality of terminals; and transmission circuitry, which, in operation, transmits the control signal.

In an exemplary embodiment of the present disclosure, a radio resource allocated to the uplink transmission is at least part of time of a transmission opportunity acquired by the access point and at least part of a band to which the control signal is assigned.

In an exemplary embodiment of the present disclosure, the information on the transmission destination indicates whether or not the uplink transmission to the access point is allowed.

In an exemplary embodiment of the present disclosure, the information on the transmission destination indicates either of permission for communication with any of another terminal different from the plurality of terminals and the access point or permission for communication with the other terminal.

In an exemplary embodiment of the present disclosure, the plurality of terminals are terminals for which inter-terminal communication is configured.

In an exemplary embodiment of the present disclosure, reception circuitry, which, in operation, receives a response signal to the control signal in a band indicated by the control signal is further included.

In an exemplary embodiment of the present disclosure, the information on the transmission destination indicates the transmission destination in each of a plurality of portions into which the at least part of the time is divided.

In an exemplary embodiment of the present disclosure, in the at least part of the time, an allocated time for a terminal assigned to a Primary channel is shorter than an allocated time for a terminal assigned to a Secondary channel among the plurality of terminals.

In an exemplary embodiment of the present disclosure, in the time of the transmission opportunity, communication in a band that includes no Primary channel is allowed for the access point and the plurality of terminals.

In an exemplary embodiment of the present disclosure, in the at least part of the time, communication in a band that includes no Primary channel is allowed for the access point and the plurality of terminals.

In an exemplary embodiment of the present disclosure, at least one of the plurality of terminals to which the band that includes no Primary channel is indicated is a terminal for which a Sub-Channel Selective (SST) Mode is configured.

A terminal according to an exemplary embodiment of the present disclosure includes: reception circuitry, which, in operation, receives a control signal that indicates uplink transmission from a plurality of terminals, the control signal including information on a transmission destination of the uplink transmission for each of the plurality of terminals; and control circuitry, which, in operation, controls the uplink transmission.

A communication method according to an exemplary embodiment of the present disclosure includes: generating, by an access point, a control signal that indicates uplink transmission from a plurality from terminals, the control signal including information on a transmission destination of the uplink transmission for each of the plurality of terminals; and transmitting, by the access point, the control signal.

A communication method according to an exemplary embodiment of the present disclosure includes: receiving, by a terminal, a control signal that indicates uplink transmission from a plurality from terminals, the control signal including information on a transmission destination of the uplink transmission for each of the plurality of terminals; and controlling, by the terminal, the control signal.

The disclosure of Japanese Patent Application No. 2022-084544, filed on May 24, 2022, including the specification, drawings and abstract, is incorporated herein by reference in its entirety.

### Industrial Applicability

An exemplary embodiment of the present disclosure is useful for radio communication systems.

### Reference Signs List

100 AP
101, 206 Scheduler
102 Common Info generator
103 User Info generator
104 Trigger frame generator
105, 208 Error correction encoder
106, 209 Modulator
107, 201 Radio transceiver
108, 202 Demodulator
109, 203 Error correction decoder
110 Terminal information holder
200 Terminal
204 Common Info acquirer
205 User Info acquirer
207 Data generator

## Claims

1. An access point, comprising:
control circuitry, which, in operation, generates a control signal that indicates uplink transmission from a plurality of terminals, the control signal including information on a transmission destination of the uplink transmission for each of the plurality of terminals; and
transmission circuitry, which, in operation, transmits the control signal.

2. The access point according to claim 1, wherein a radio resource allocated to the uplink transmission is at least part of time of a transmission opportunity acquired by the access point and at least part of a band to which the control signal is assigned.

3. The access point according to claim 1, wherein the information on the transmission destination indicates whether or not the uplink transmission to the access point is allowed.

4. The access point according to claim 1, wherein the information on the transmission destination indicates either of permission for communication with any of another terminal different from the plurality of terminals and the access point or permission for communication with the other terminal.

5. The access point according to claim 1, wherein the plurality of terminals are terminals for which inter-terminal communication is configured.

6. The access point according to claim 1, further comprising reception circuitry, which, in operation, receives a response signal to the control signal in a band indicated by the control signal.

7. The access point according to claim 2, wherein the information on the transmission destination indicates the transmission destination in each of a plurality of portions into which the at least part of the time is divided.

8. The access point according to claim 2, wherein, in the at least part of the time, an allocated time for a terminal assigned to a Primary channel is shorter than an allocated time for a terminal assigned to a Secondary channel among the plurality of terminals.

9. The access point according to claim 2, wherein, in the time of the transmission opportunity, communication in a band that includes no Primary channel is allowed for the access point and the plurality of terminals.

10. The access point according to claim 2, wherein, in the at least part of the time, communication in a band that includes no Primary channel is allowed for the access point and the plurality of terminals.

11. The access point according to claim 10, wherein at least one of the plurality of terminals to which the band that includes no Primary channel is indicated is a terminal for which a Sub-Channel Selective (SST) Mode is configured.

12. A terminal, comprising:
reception circuitry, which, in operation, receives a control signal that indicates uplink transmission from a plurality of terminals, the control signal including information on a transmission destination of the uplink transmission for each of the plurality of terminals; and
control circuitry, which, in operation, controls the uplink transmission.

13. A communication method, comprising:
generating, by an access point, a control signal that indicates uplink transmission from a plurality from terminals, the control signal including information on a transmission destination of the uplink transmission for each of the plurality of terminals; and
transmitting, by the access point, the control signal.

14. A communication method, comprising:
receiving, by a terminal, a control signal that indicates uplink transmission from a plurality from terminals, the control signal including information on a transmission destination of the uplink transmission for each of the plurality of terminals; and
controlling, by the terminal, the control signal.
